(19) Europäisches Patentamt
European Patent Office
Office européen des brevets

(11) **EP 2 326 039 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
***H04L 1/20*** *(2006.01)*

(21) Anmeldenummer: **10014761.0**

(22) Anmeldetag: **18.11.2010**

(54) **Verfahren und Vorrichtung zum Ermitteln von Amplituden- und Phasenstörungen in einem Messsignal**

Method and device for detecting amplitude and phase faults in a measurement signal

Procédé et dispositif d'établissement de perturbations d'amplitudes et de phases dans un signal de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2009 DE 102009054034**
**21.04.2010 DE 102010015706**

(43) Veröffentlichungstag der Anmeldung:
**25.05.2011 Patentblatt 2011/21**

(73) Patentinhaber: **Rohde & Schwarz GmbH & Co. KG**
**81671 München (DE)**

(72) Erfinder: **Polz, Ernst**
**84562 Mettenheim (DE)**

(74) Vertreter: **Körfer, Thomas et al**
**Mitscherlich & Partner**
**Patent- und Rechtsanwälte**
**Postfach 33 06 09**
**80066 München (DE)**

(56) Entgegenhaltungen:
**EP-A1- 0 366 160     US-A1- 2008 098 055**

• **PRADEEP AGGARWAL ET AL: "Multilevel sequential monte carlo algorithms for MIMO demodulation", IEEE TRANSACTIONS ON WIRELESS COMMUNICATIONS, IEEE SERVICE CENTER, PISCATAWAY, NJ, US, Bd. 6, Nr. 2, 1. Februar 2007 (2007-02-01), Seiten 750-758, XP011165505, ISSN: 1536-1276, DOI: DOI: 10.1109/TWC.2007.05453**

**Beschreibung**

Die Erfindung betrifft ein Verfahren und eine Vorrichtung zum Ermitteln von Amplituden- und Phasenstörungen in einem Messsignal.

Digitale Einträgermodulationssignale sind durch eine Vielzahl von Störungen, beispielsweise Amplitudenrauschen, Phasenrauschen, lineare und nichtlineare Verzerrung, Vorliegen eines Restträgers, Quadraturfehler und Asymmetrie zwischen Inphase- und Quadraturkanal, gestört. Die einzelnen Störungen verschlechtern die Signalqualität und beeinflussen die sie charakterisierenden Fehlergrößen, wie Modulationsfehlerverhältnis (Modulation-Error-Ratio, (=MER), Modulations-Fehler-Verhältnis) oder Fehlervektorverhältnis (Error-Vector-Magnitude, (=EVM), Fehler-Vektor-Größe).

Hinsichtlich der Ermittlung von Fehlergrößen wie MER oder EVM eines zu untersuchenden Messsignals sei auf die DE 199 49 774 A1 verwiesen.

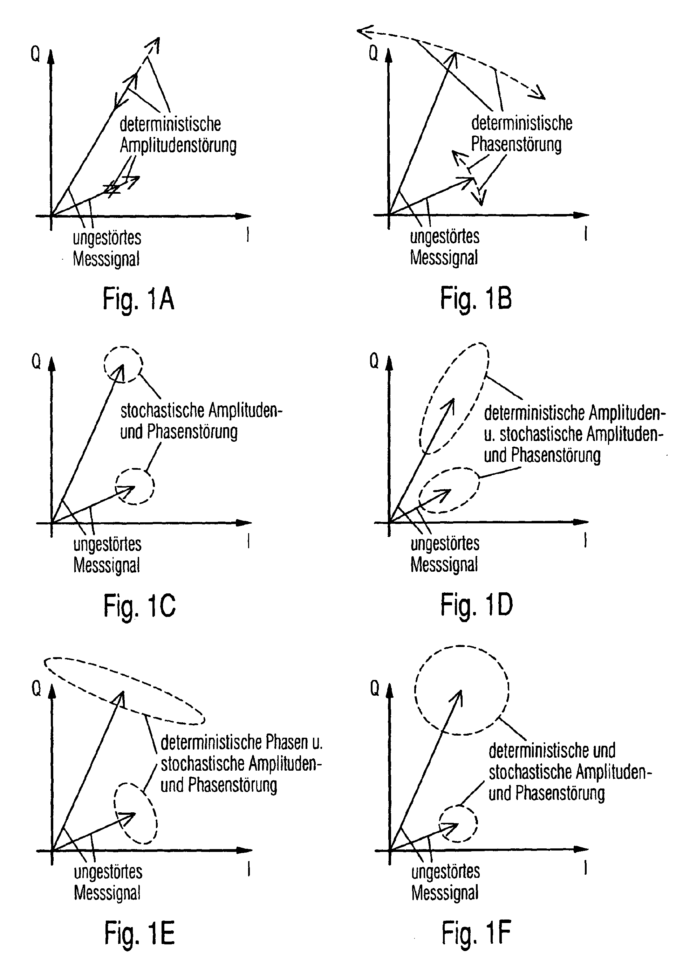

Prinzipiell beeinflussen die einzelnen Störungen die Amplitude und/oder die Phase des Übertragungssignals. Die Störungen der Amplitude und/oder der Phase kann rein deterministischer Natur, wie im Fall einer linearen Verzerrung, oder, wie im Fall von überlagertem Rauschen, stochastischer Natur sein. Somit ergeben sich prinzipiell drei Gruppen von störbedingten Beeinflussungen des Übertragungssignals, nämlich deterministische Beeinflussung der Amplitude des Übertragungssignals gemäß Fig. 1A, deterministische Beeinflussung der Phase des Übertragungssignals gemäß Fig. 1B und stochastische Beeinflussung der Amplitude und gleichzeitig der Phase des Übertragungssignals gemäß Fig. 1C. In den Fig. 1D bis 1F sind Mischformen von Störungen dargestellt: In Fig. 1D die deterministische Amplitudenstörung in Kombination mit stochastischer Amplituden- und gleichzeitiger Phasenstörung in Fig. 1E die deterministische Phasenstörung in Kombination mit stochastischer Amplituden- und gleichzeitiger Phasenstörung und in Fig. 1F die deterministische Amplituden- und Phasenstörung in Kombination mit stochastischer Amplituden- und Phasenstörung.

Bei gleichzeitigem Vorliegen mehrerer verschiedener Störungen aus der gemessenen Gesamtfehlergröße auf den Anteil jeder einzelnen Störung auf die Gesamtfehlergröße zu schließen, ist aufgrund der Komplexität der kausalen technischen Zusammenhänge nicht zu verwirklichen. Auch eine Untergliederung der einzelnen Fehlergrößen auf die Anteile, die den einzelnen Gruppen von störbedingten Beeinflussungen des Übertragungssignals zuordenbar sind, ist aus dem Stand der Technik bisher nicht bekannt.

Aufgabe der Erfindung ist es deshalb, ein Verfahren und eine Vorrichtung zu schaffen, um den Einfluss von einzelnen Gruppen von Störungen auf einzelne Fehlergrößen eines digital modulierten Einträgerübertragungssignals zu bestimmen.

Die Erfindungsaufgabe wird durch ein Verfahren zum Ermitteln von eine deterministische Amplitudenstörung eines Messsignals jeweils kennzeichnenden Fehlergrößen mit den Merkmalen des Anspruchs 1 und eine zugehörige Vorrichtung zum Ermitteln von eine deterministische Amplitudenstörung eines Messsignals jeweils kennzeichnenden Fehlergrößen mit den Merkmalen des Anspruchs 16, durch ein Verfahren zum Ermitteln von eine stochastische Amplituden- und Phasenstörung eines Messsignals jeweils kennzeichnenden Fehlergrößen mit den Merkmalen des Anspruchs 6 und eine zugehörige Vorrichtung zum Ermitteln von eine stochastische Amplituden- und Phasenstörung eines Messsignals jeweils kennzeichnenden Fehlergrößen mit den Merkmalen des Anspruchs 17 und durch ein Verfahren zum Ermitteln von eine deterministische Phasenstörung eines Messsignals jeweils kennzeichnenden Fehlergrößen mit den Merkmalen des Anspruchs 11 und eine zugehörige Vorrichtung zum Ermitteln von eine deterministische Phasenstörung eines Messsignals jeweils kennzeichnenden Fehlergrößen mit den Merkmalen des Anspruchs 18 gelöst. Die abhängigen Ansprüche enthalten vorteilhafte Weiterbildungen.

Zuerst werden die In-Phase-Anteile der im gestörten Messsignal enthaltenen Störungen, die eine identische Phase zur Phase des zugehörigen ungestörten Messsignals aufweisen, mehrfach erfasst.

Die erfassten In-Phase-Anteile der im gestörten Messsignal enthaltenen Störungen werden anschließend in mindestens zwei Klassen von In-Phase-Anteilen sortiert. Nach Summieren der zu jeweils einer Klasse gehörigen quadrierten In-Phase-Anteile der im gestörten Messsignal enthaltenen Störungen zu jeweils einer ersten Summe und der zugehörigen quadrierten Amplituden des ungestörten Messsignals zu jeweils einer zweiten Summe wird eine erste, eine deterministische Amplitudenstörung kennzeichnende Kenngröße aus den für zwei Klassen jeweils ermittelten ersten und zweiten Summen ermittelt.

Im Fall der Ermittlung einer eine stochastische Amplituden- und Phasenstörung kennzeichnenden Fehlergröße wird ebenfalls zuerst eine erste, eine deterministische Amplitudenstörung kennzeichnende Fehlergröße bestimmt. Darauf aufbauend wird eine erste Differenz aus einer zu erfassten In-Phase-Anteilen der im gestörten Messsignal enthaltenen Störungen gehörigen ersten Summe und der mit der zu erfassten Amplituden des ungestörten Messsignals gehörigen zweiten Summe multiplizierten quadrierten ersten, eine deterministische Amplitudenstörung kennzeichnenden Fehlergröße gebildet. Eine erste, eine stochastische Amplituden- und Phasenstörung kennzeichnende Fehlergröße wird durch Skalieren der doppelten ersten Differenz durch die Anzahl von erfassten In-Phase-Anteilen ermittelt.

Im Fall der Ermittlung einer eine deterministische Phasenstörung kennzeichnenden Fehlergröße wird ebenfalls eine erste, eine deterministische Amplitudenstörung kennzeichnende Fehlergröße ermittelt und eine erste Differenz aus einer zu erfassten In-Phase-Anteilen der im gestörten Messsignal enthaltenen Störungen jeweils gehörigen ersten Summe und der mit der zu Amplituden des ungestörten Messsignals gehörigen zweiten Summe multiplizierten quadrierten ersten, eine deterministische Amplitudenstörung kennzeichnenden Fehlergröße gebildet. Nach ebenfalls mehrfacher Erfassung von Quadratur-Anteilen der im gestörtem Messsignal enthaltenen Störungen wird eine dritte Summe aus den erfassten quadrierten Quadratur-Anteilen ermittelt und anschließend eine zweite Differenz aus der ermittelten dritten Summe und der ermittelten ersten Differenz gebildet. Schließlich wird eine erste, eine deterministische Phasenstörung kennzeichnende Fehlergröße durch Skalieren der zweiten Differenz durch die Anzahl von erfassten In-Phasen-Anteilen bestimmt.

Aus der ersten, eine deterministische Amplitudenstörung kennzeichnende Fehlergröße wird bevorzugt eine zweite, eine deterministische Amplitudenstörung kennzeichnende und einem linearen Modulationsfehlerverhältnis entsprechende Fehlergröße ermittelt, indem die quadrierte erste Fehlergröße mit dem Mittelwert über die zugehörigen quadrierten Amplituden des ungestörten Messsignals multipliziert und anschließend mit der mittleren Signalleistung über die zugehörigen Amplituden des ungestörten Messsignals skaliert wird.

Aus der ersten, eine deterministische Phasenstörung oder eine stochastische Amplituden- und gleichzeitig Phasenstörung kennzeichnende Fehlergröße wird vorzugsweise eine zweite eine deterministische Phasenstörung oder eine stochastische Amplituden- und gleichzeitig Phasenstörung kennzeichnende Fehlergröße ermittelt, indem die jeweilige erste Fehlergröße mit der mittleren Signalleistung über die zugehörigen Amplituden des ungestörten Messsignals skaliert wird.

Aus der zweiten, ein lineares Modulationsfehlerverhältnis jeweils kennzeichnenden Fehlergröße wird vorzugsweise eine dritte, ein logarithmiertes Modulationsfehlerverhältnis jeweils kennzeichnende Fehlergröße ermittelt, indem die jeweilige zweite Fehlergröße invertiert und logarithmiert wird.

Aus der ersten, eine deterministische Amplitudenstörung kennzeichnende Fehlergröße wird bevorzugt eine dritte, eine deterministische Amplitudenstörung kennzeichnende und einem linearen Fehlervektorverhältnis entsprechende Fehlergröße ermittelt, indem die quadrierte erste Fehlergröße mit dem Mittelwert über die zugehörigen quadrierten Amplituden des ungestörten Messsignals multipliziert und anschließend mit der maximale Signalleistung aus den zugehörigen Amplituden des ungestörten Messsignals skaliert wird.

Aus der ersten, eine deterministische Phasenstörung oder eine stochastische Amplituden- und gleichzeitig Phasenstörung kennzeichnende Fehlergröße wird vorzugsweise eine dritte eine deterministische Phasenstörung oder eine stochastische Amplituden- und gleichzeitig Phasenstörung kennzeichnende Fehlergröße ermittelt, indem die jeweilige erste Fehlergröße mit der maximalen Signalleistung aus den zugehörigen Amplituden des ungestörten Messsignals skaliert wird.

Aus der dritten, ein lineares Fehlervektorverhältnis jeweils kennzeichnende Fehlergröße wird eine vierte, ein logarithmiertes Fehlervektorverhältnis jeweils kennzeichnende Fehlergröße ermittelt, indem die jeweilige dritte Fehlergröße invertiert und logarithmiert wird.

Die Verfahren und Vorrichtungen zum Ermitteln von Fehlergrößen, die eine deterministische Amplituden-, eine deterministische Phasen- und eine stochastische Amplituden- und gleichzeitig eine stochastische Phasenstörung kennzeichnen, werden im folgenden anhand der Zeichnung im Detail erläutert. Die Figuren der Zeichnung zeigen:

Fig. 1A   ein Zustandsdiagramm mit einem ungestörten Messsignal und der Ortskurven des gestörten Messsignals bei einer deterministischen Amplitudenstörung,

Fig. 1B   ein Zustandsdiagramm mit einem ungestörten Messsignal und der Ortskurve des gestörten Messsignals bei einer deterministischen Phasenstörung,

Fig. 1C   ein Zustandsdiagramm mit einem ungestörten Messsignal und der Ortskurve des gestörten Messsignals bei stochastischer Amplituden- und gleichzeitig stochastischer Phasenstörung,

Fig. 1D   ein Zustandsdiagramm mit einem ungestörten Messsignal und der Ortskurve des gestörten Messsignals bei einer Kombination von deterministischen Amplitudenstörung und stochastischen Amplituden- und stochastischer Phasenstörung,

Fig. 1E   ein Zustandsdiagramm mit einem ungestörten Messsignal und der Ortskurve des gestörten Messsignals bei einer Kombination von deterministischen Phasenstörung und stochastischen Amplituden- und stochastischer Phasenstörung,

Fig. 1F   ein Zustandsdiagramm mit einem ungestörten Messsignal und der Ortskurve des gestörten Messsignals bei einer Kombination von deterministischen Amplituden- und Phasenstörung und stochastischen Amplituden- und Phasenstörung,

Fig. 2    ein Zustandsdiagramm mit gestörtem und ungestörtem Messsignal und überlagerter Störung,

Fig. 3    ein Zustandsdiagramm mit gestörtem und ungestörtem Messsignal und überlagerter Störung bei deterministischer Phasenstörung,

Fig. 4A    ein Flussdiagramm des erfindungsgemäßen Verfahrens zum Ermitteln von eine deterministische Amplitudenstörung eines Messsignals jeweils kennzeichnenden Fehlergrößen,

Fig. 4B    ein Flussdiagramm des erfindungsgemäßen Verfahrens zum Ermitteln von eine stochastische Amplituden- und Phasenstörung eines Messsignals jeweils kennzeichnenden Fehlergrößen,

Fig. 4C    ein Flussdiagramm des erfindungsgemäßen Verfahrens zum Ermitteln von eine deterministische Phasenstörung eines Messsignals jeweils kennzeichnenden Fehlergrößen,

Fig. 5A    ein Blockdiagramm der erfindungsgemäßen Vorrichtung zum Ermitteln von eine deterministische Amplitudenstörung eines Messsignals jeweils kennzeichnenden Fehlergrößen,

Fig. 5B    ein Blockdiagramm der erfindungsgemäßen Vorrichtung zum Ermitteln von eine stochastische

Fig. 5C    Amplituden- und Phasenstörung eines Messsignals jeweils kennzeichnenden Fehlergrößen und ein Blockdiagramm der erfindungsgemäßen Vorrichtung zum Ermitteln von eine deterministische Phasenstörung eines Messsignals jeweils kennzeichnenden Fehlergrößen.

Bevor die einzelnen erfindungsgemäßen Verfahren und Vorrichtungen im Detail erläutert werden, werden im folgenden die für das Verständnis der Erfindung erforderlichen mathematischen Grundlagen hergeleitet:

Für den Fall einer deterministischen Amplitudenstörung gemäß Fig. 1A wird entsprechend Gleichung (1) ein Amplitudenmodulationsgrad $m_{AM}$ als Verhältnis der Amplitude der im gestörten Messsignal enthaltenen Störung $A_{,Störung}$ und der Amplitude des ungestörten Messsignals $A_{Ideal}$ definiert. Die Amplitude $A_{,Störung}$ der im gestörten Messsignal enthaltenen Störung ergibt sich wiederum aus der Differenz zwischen dem In-Phase-Anteil $A_{Störung-1}$ der gesamten Amplitudenstörung, der die gleiche Phase wie die Amplitude $A_{Ideal\_l}$ des ungestörten Messsignals aufweist, und dem In-Phase-Anteil $A_{AWGN-1}$ der stochastischen Amplituden- und stochastischen Phasenstörung, dessen Amplituden-Anteil ebenfalls die gleiche Phase wie die Amplitude $A_{Ideal-l}$ des ungestörten Messsignals aufweist.

$$m_{AM} = \frac{A_{Störung}}{A_{Ideal}} = \frac{A_{Störung\_l} - A_{AWGN\_l}}{A_{Ideal\_l}} \qquad (1)$$

Im Hinblick auf die zu bestimmenden Fehlergrößen, die sich an den bekannten Fehlergrößen Modulationsfehlerverhältnis und Fehlervektorverhältnis orientieren und somit Leistungsgrößen enthalten, wird gemäß Gleichung (2) der quadrierte Amplitudenmodulationsgrad $m_{AM}^2$ bestimmt.

$$m_{AM}^2 = \frac{\sum_{i=1}^{n} A^2_{Störung\_l\_i} - \sum_{i=1}^{n} A^2_{AWGN\_l\_i}}{\sum_{i=1}^{n} A^2_{Ideal\_l\_i}} \qquad (2)$$

Da die Gleichung (2) zwei unbekannte Größen $m_{AM}^2$ und $\sum_{i=1}^{} A^2_{AWGN-l-i}$ aufweist, werden zur Bestimmung der unbekannten Größe $m_{AM}^2$ die jeweils insgesamt $n$-fach gemessenen Größen $A^2_{störung\_l\_i}$ und $A^2_{Ideal-l-i}$ entsprechend der Größe der Amplitude $A^2_{Ideal\_l\_i}$ des ungestörten Messsignals in zwei Klassen sortiert, nämlich in eine insgesamt $g$ Werte enthaltende Klasse von Größen $A^2_{störung\ -l-i-groß}$ und $A^2_{ideal-l-i-groß}$ mit großer Amplitude $A_{Ideal\_l-i}$ des ungestörten Messsignals und in eine insgesamt $k$ Werte enthaltende Klasse von Größen $A^2_{Störung\_l\_i\_klein}$ und $A^2_{Ideal-l-i-klein}$ mit kleiner Amplitude $A_{Ideal-l\ -i}$ des ungestörten Messsignals, wobei $n = g + k$ gilt. Die Beziehung in Gleichung (2) wird unter Berücksichtigung dieser Größen nach Gleichunct (3) überaeführt.

$$m_{AM}{}^2 = \frac{\sum_{i=1}^{g} A^2_{St\"orung\_I\_i\_gro\beta} - \sum_{i=1}^{g} A^2_{AWGN\_I\_i\_gro\beta}}{\sum_{i=1}^{g} A^2_{Ideal\_I\_i\_gro\beta}} = \frac{\sum_{i=1}^{k} A^2_{St\"orung\_I\_i\_klein} - \sum_{i=1}^{k} A^2_{AWGN\_I\_i\_klein}}{\sum_{i=1}^{k} A^2_{Ideal\_I\_i\_klein}}$$

$$(3)$$

Die unbekannte Größe $\sum_{i=1}^{n} A^2_{AWGN\_I\_i}$ ergibt sich durch Umformung von Gleichung (3) gemäß Gleichung (4).

$$\sum_{i=1}^{g} A^2_{AWGN\_I\_i\_gro\beta} = \sum_{i=1}^{g} A^2_{St\"orung\_I\_i\_gro\beta} - m_{AM}{}^2 \cdot \sum_{i=1}^{g} A^2_{Ideal\_I\_i\_gro\beta} =$$

$$= \sum_{i=1}^{g} A^2_{AWGN\_I\_i\_klein} = \sum_{i=1}^{k} A^2_{St\"orung\_I\_i\_klein} - m_{AM}{}^2 \cdot \sum_{i=1}^{k} A^2_{Ideal\_I\_i\_klein}$$

$$(4)$$

Setzt man die Beziehung der unbekannten Größe $\sum_{i=1}^{n} A^2_{AWGN\_I\_i}$ aus Gleichung (4) in Gleichung (3) ein, so ergibt sich für den Amplitudenmodulationsgrad $m_{Am}$ die Beziehung in Gleichung (5), der die erste, eine deterministische Amplitudenstörung kennzeichnende Kenngröße darstellt, die in der Anmeldung auch als erste Fehlergröße bezeichnet wird.

$$m_{AM} = \sqrt{\frac{\sum_{i=1}^{g} A^2_{St\"orung\_I\_i\_gro\beta} - \sum_{i=1}^{k} A^2_{St\"orung\_I\_i\_klein}}{\sum_{i=1}^{g} A^2_{Ideal\_I\_i\_gro\beta} - \sum_{i=1}^{k} A^2_{Ideal\_I\_i\_klein}}}$$

$$(5)$$

Die Leistung $P_{Am\ St\"orung}$ der deterministischen Amplitudenstörung ergibt sich gemäß Gleichung (6) durch "Entnormierung" des quadrierten Amplitudenmodulationsgrads $m_{AM}{}^2$ mit der mittleren Leistung des ungestörten Messsignals.

$$P_{AM\_St\"orung} = m_{AM}{}^2 \cdot \frac{\sum_{i=1}^{n} A^2_{Ideal\_I\_i}}{n}$$

$$(6)$$

Für die Berechnung der zweiten, eine deterministische Amplitudenstörung kennzeichnende und einem linearen Modulationsfehlerverhältnis entsprechende Fehlergröße *MER_AM_lin* wird, um eine Vergleichbarkeit der ermittelten Fehlergrößen zu erzielen, eine gleiche Skalierung wie im Fall der Berechnung des Gesamtmodulationsfehlerverhältnisses durchgeführt. Da eine Gleichverteilung der Konstellationszustände vorausgesetzt wird, wird hierzu gemäß Gleichung (8) die Leistung $P_{AM\_.St\"orung}$ der deterministischen Amplitudenstörung mit der mittleren Signalleistung $P_{Signal}$ gemäß Gleichung (7) normiert.

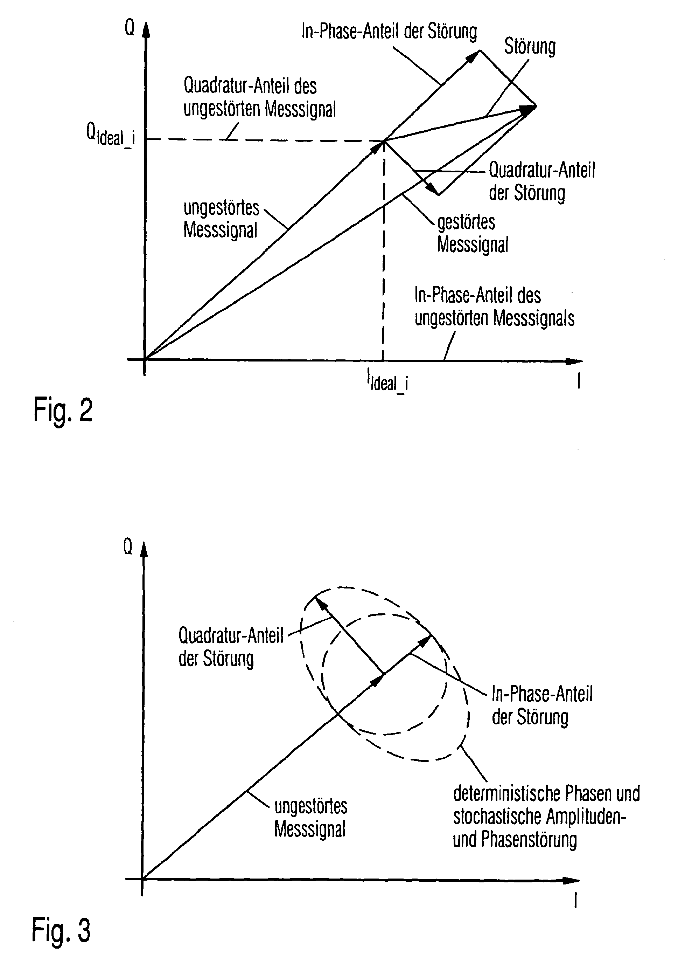

Für die Berechnung der mittleren Signalleistung $P_{Signal}$ wird gemäß Fig. 2 neben dem In-Phase-Anteil $I_{Ideal-i}$ des ungestörten Messsignals der Quadratur-Anteil $Q_{Ideal-i}$ des ungestörten Messsignals verwendet.

$$\overline{P}_{Signal} = \frac{\sum_{i=1}^{n}\left(I^2{}_{Ideal\_i} + Q^2{}_{Ideal\_i}\right)}{n} \qquad (7)$$

$$MER\_AM\_lin = \frac{m_{AM}{}^2 \cdot \dfrac{\sum_{i=1}^{n} A^2{}_{Ideal\_I\_i}}{n}}{\overline{P}_{Signal}} \qquad (8)$$

Die dritte, eine deterministische Amplitudenstörung kennzeichnende und einem logarithmierten Modulationsfehlerverhältnis entsprechende Fehlergröße *MER_AM_*log ergibt sich gemäß Gleichung (9) durch Invertierung und anschließende Logarithmierung der zweiten, eine deterministische Amplitudenstörung kennzeichnende und einem linearen

Modulationsfehlerverhältnis entsprechende Fehlergröße *MER AM lin.*

$$MER\_AM\_\log = 10 \cdot \log\left(\frac{\overline{P}_{Signal}}{m_{AM}{}^2 \cdot \dfrac{\sum_{i=1}^{n} A^2{}_{Ideal\_I\_i}}{n}}\right) \qquad (9)$$

Für die Berechnung der vierten, eine deterministische Amplitudenstörung kennzeichnende und einem linearen Fehlervektorverhältnis entsprechende Fehlergröße *EVM_AM_lin* wird, um eine Vergleichbarkeit der ermittelten Fehlergrößen zu erzielen, eine gleiche Skalierung wie im Fall der Berechnung des Gesamtfehlervektorverhältnisses durchgeführt. Hierzu wird gemäß Gleichung (8) die Leistung $P_{AM\_Störung}$ der deterministischen Amplitudenstörung mit der maximalen Signalleistung $P_{Signal\_Max}$ gemäß Gleichung (9) normiert.

$$P_{Signal\_Max} = Max\left\{I^2{}_{Ideal\_1} + Q^2{}_{Ideal\_1}, \ldots, I^2{}_{Ideal\_i} + Q^2{}_{Ideal\_i}, \ldots, I^2{}_{Ideal\_n} + Q^2{}_{Ideal\_n}\right\}$$

$$(9)$$

$$EVM\_AM\_lin = \frac{m_{AM}{}^2 \cdot \dfrac{\sum_{i=1}^{n} A^2{}_{Ideal\_I\_i}}{n}}{P_{Signal\_Max}} \qquad (10)$$

Die fünfte, eine deterministische Amplitudenstörung kennzeichnende und einem logarithmierten Fehlervektorverhältnis entsprechende Fehlergröße *EVM_AM_*log wird gemäß Gleichung (11) durch Invertierung und anschließende Logarithmierung der vierten, eine deterministische Amplitudenstörung kennzeichnende und einem linearen Fehlervektorverhältnis entsprechende Fehlergröße *EVM_AM_lin* ermittelt.

$$EVM\_AM\_\log = 10 \cdot \log\left(\frac{\overline{P}_{Signal\_Max}}{m_{AM}^2 \cdot \dfrac{\sum\limits_{i=1}^{n} A^2_{Ideal\_I\_i}}{n}}\right) \tag{11}$$

Im Fall einer stochastischen Amplituden- und gleichzeitig stochastischen Phasenstörung lässt sich ausgehend von der mathematischen Beziehung für den quadrierten In-Phase-Anteil der stochastischen Amplituden- und Phasenstörung gemäß Gleichung (4) unter der Bedingung, dass aufgrund der Stochastik des additiven weißen Gauss'schen Rauschen (AWGN) gemäß Gleichung (12) der quadrierte In-Phase-Anteil $A^2AWGN\_I\_i$ der stochastischen Amplituden- und Phasenstörung identisch zum quadrierten Quadratur-Anteil $A^2_{AWGN-Q-i}$ der stochastischen Amplituden- und Phasenstörung ist, die Leistung $P_{AWGN}$ der stochastischen Amplituden- und Phasenstörung, die die erste, eine stochastische Amplituden- und Phasenstörung kennzeichnende Fehlergröße darstellt, durch Normierung mit der Anzahl von Abtastwerten gemäß Gleichung (13) berechnen.

$$\sum_{i=0}^{n} A^2_{AWGN\_I\_i} = \sum_{i=0}^{n} A^2_{AWGN\_Q\_i} \tag{12}$$

$$P_{AWGN} = \frac{\sum\limits_{i=1}^{n}(A^2_{AWGN\_I\_i} + A^2_{AWGN\_Q\_i})}{n} = \frac{2 \cdot \sum\limits_{i=1}^{n} A^2_{AWGN\_I\_i}}{n} =$$

$$= \frac{2 \cdot \sum\limits_{i=1}^{g} A^2_{AWGN\_I\_i\_groß}}{g} = \frac{2 \cdot \sum\limits_{i=1}^{k} A^2_{AWGN\_I\_i\_klein}}{k} \tag{13}$$

Um einen möglichst exakten Wert für die Leistung $P_{AWGN}$ der stochastischen Amplituden- und Phasenstörung zu erzielen, wird im folgenden über die gesamte Anzahl $n$ von Abtastwerten summiert.
Die zweite, eine stochastische Amplituden- und Phasenstörung kennzeichnende und einem linearen Modulationsfehlerverhältnis entsprechenden Fehlergröße $MER\_AWGN\_lin$ lässt sich gemäß Gleichung (14) durch Normierung der ersten, eine stochastische Amplituden- und Phasenstörung kennzeichnenden und einem linearen Modulationsfehlerverhältnis entsprechenden Fehlergröße durch die mittlere Signalleistung $P_{Signal}$ berechnen.

$$MER\_AWGN\_lin = \frac{\dfrac{2 \cdot \sum\limits_{i=1}^{n} A^2_{AWGN\_I\_i}}{n}}{\overline{P}_{Signal}} \tag{14}$$

Die dritte, eine stochastische Amplituden- und Phasenstörung kennzeichnende und einem logarithmierten Modulationsfehlerverhältnis entsprechenden Fehlergröße $MER\_AWGN\_log$ ergibt sich gemäß Gleichung (15) durch Invertierung und anschließende Logarithmierung der zweiten, eine stochastische Amplituden- und Phasenstörung kennzeichnende und einem linearen
Modulationsfehlerverhältnis entsprechenden Fehlergröße $MER-AWGN-lin$.

$$MER\_AWGN\_\log = \frac{\overline{P}_{Signal}}{\dfrac{2 \cdot \sum\limits_{i=1}^{n} A^2_{AWGN\_I\_i}}{n}} \qquad (15)$$

Bei der vierten, eine stochastische Amplituden- und Phasenstörung kennzeichnenden und einem linearen Fehlervektorverhältnis entsprechenden Fehlergröße *EVM_AWGN_lin* wird gemäß Gleichung (16) die erste, eine stochastische Amplituden- und Phasenstörung kennzeichnende und einem linearen Modulationsfehlerverhältnis entsprechende Fehlergröße durch die maximale Signalleistung $P_{Signal\_Max}$ normiert.

$$EVM\_AWGN\_lin = \frac{\dfrac{2 \cdot \sum\limits_{i=1}^{n} A^2_{AWGN\_I\_i}}{n}}{\overline{P}_{Signal\_Max}} \qquad (16)$$

Die fünfte, eine stochastische Amplituden- und Phasenstörung kennzeichnende und einem logarithmierten Fehlervektorverhältnis entsprechende Fehlergröße *EVM_AWGN_log* wird schließlich gemäß Gleichung (17) durch Invertierung und anschließende Logarithmierung der vierten, eine stochastische Amplituden- und Phasenstörung kennzeichnenden und einem linearen Fehlervektorverhältnis entsprechenden Fehlergröße *EVM_AWGN_lin* berechnet.

$$EVM\_AWGN\_\log = \frac{\overline{P}_{Signal\_Max}}{\dfrac{2 \cdot \sum\limits_{i=1}^{n} A^2_{AWGN\_I\_i}}{n}} \qquad (17)$$

Im Fall einer deterministischen Phasenstörung gemäß Fig. 3 werden zur Ermittlung der Leistung $P_{PM\_Störung}$ einer deterministischen Phasenstörung die einzelnen Quadratur-Anteile $A_{Störung\text{ -}Ideal\text{-}Q}$ der im gestörten Messsignal enthaltenen Störungen erfasst, quadriert und aufsummiert und davon die quadrierten und aufsummierten Quadratur-Anteile $A^2_{AWG}N\_Q$ der stochastischen Amplituden- und Phasenstörung subtrahiert sowie abschließend der Wert der daraus entstehenden Differenz mit der Anzahl $n$ von Abtastwerten normiert.

Die quadrierten und aufsummierten Quadratur-Anteile $A^2_{AWGN\_Q}$ der stochastischen Amplituden- und Phasenstörung können gemäß Gleichung (12) durch die quadrierten und aufsummierten *In-Phase-Anteile* $A^2_{AWGN\_I}$ der stochastischen Amplituden- und Phasenstörung ersetzt werden, die sich wiederum in Anlehnung an Gleichung (4) gemäß Gleichung (18) ergeben.

$$\sum_{i=1}^{n} A^2_{AWGN\_I\_i} = \sum_{i=1}^{n} A^2_{Störung\_I\_i} - m_{AM}{}^2 \cdot \sum_{i=1}^{n} A^2_{Ideal\_I\_i} \qquad (18)$$

Die Leistung $P_{PM-Störung}$ einer deterministischen Phasenstörung, die die erste, eine deterministische Phasenstörung kennzeichnende Fehlergröße darstellt, ergibt sich somit gemäß Gleichung (19).

$$P_{PM\_Störung} = \frac{\sum\limits_{i=1}^{n} A^2_{Störung-Ideal\_Q} - \sum\limits_{i=1}^{n} A^2_{AWGN\_I}}{n} \qquad (19)$$

Die zweite, eine deterministische Phasenstörung kennzeichnende und einem linearen Modulationsfehlerverhältnis entsprechende Fehlergröße *MER_PM_lin* ergibt sich gemäß Gleichung (20) bei vorausgesetzter Gleichverteilung der Konstellationszustände durch Normierung der ersten, eine deterministische Phasenstörung kennzeichnende Fehlergröße mit der mittleren Signalleistung $P_{Signal}$.

$$MER\_PM\_lin = \frac{\dfrac{\sum\limits_{i=1}^{n} A^2_{\,Störung-Ideal\_Q} - \sum\limits_{i=1}^{n} A^2_{\,AWGN\_I}}{n}}{\overline{P}_{Signal}} \qquad (20)$$

Die dritte, eine deterministische Phasenstörung kennzeichnende und einem logarithmierten Modulationsfehlerverhältnis entsprechende Fehlergröße *MER_PM_log* ergibt sich durch Invertierung und anschließende Logarithmierung der zweiten eine deterministische Phasenstörung kennzeichnende und einem linearen Modulationsfehlerverhältnis entsprechende Fehlergröße *MER_PM_lin* gemäß Gleichung (21).

$$MER\_PM\_log = \frac{\overline{P}_{Signal}}{\dfrac{\sum\limits_{i=1}^{n} A^2_{\,Störung-Ideal\_Q} - \sum\limits_{i=1}^{n} A^2_{\,AWGN\_I}}{n}} \qquad (21)$$

Die vierte, eine deterministische. Phasenstörung kennzeichnende und einem linearen Fehlervektorverhältnis entsprechende Fehlergröße *EVM_PM_lin* ergibt sich gemäß Gleichung (22) durch Normierung der ersten, eine deterministische Phasenstörung kennzeichnende Fehlergröße mit der maximalen Signalleistung $P_{Signal\_Max}$.

$$EVM\_PM\_lin = \frac{\dfrac{\sum\limits_{i=1}^{n} A^2_{\,Störung-Ideal\_Q} - \sum\limits_{i=1}^{n} A^2_{\,AWGN\_I}}{n}}{P_{Signal\_Max}} \qquad (22)$$

Die fünfte, eine deterministische Phasenstörung kennzeichnende und einem logarithmierten Fehlervektorverhältnis entsprechende Fehlergröße *EVM_PM_log* ergibt sich gemäß Gleichung (23) durch Invertierung und anschließende Logarithmierung der vierten, eine deterministische Phasenstörung kennzeichnende und einem linearen Fehlervektorverhältnis entsprechende Fehlergröße *EVM_PM_lin*.

$$EVM\_PM\_log = \frac{P_{Signal\_Max}}{\dfrac{\sum\limits_{i=1}^{n} A^2_{\,Störung-Ideal\_Q} - \sum\limits_{i=1}^{n} A^2_{\,AWGN\_I}}{n}} \qquad (23)$$

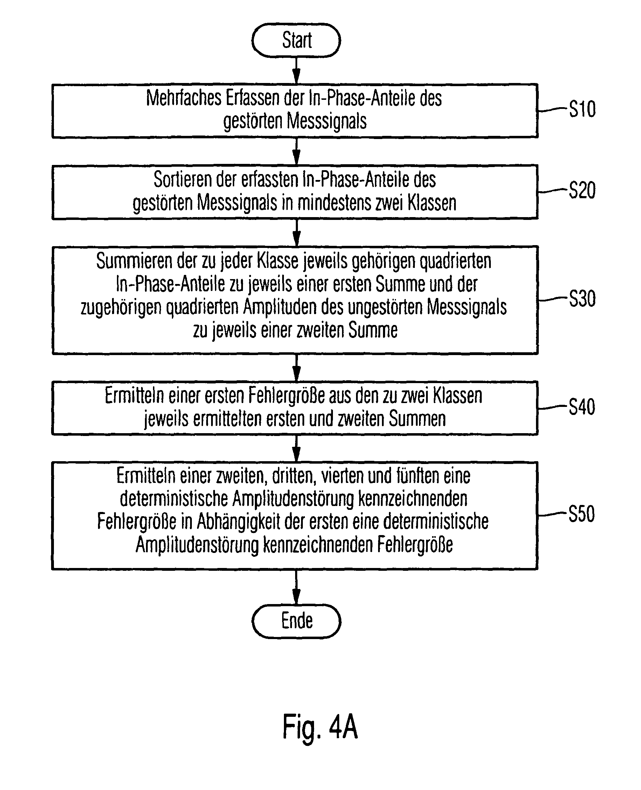

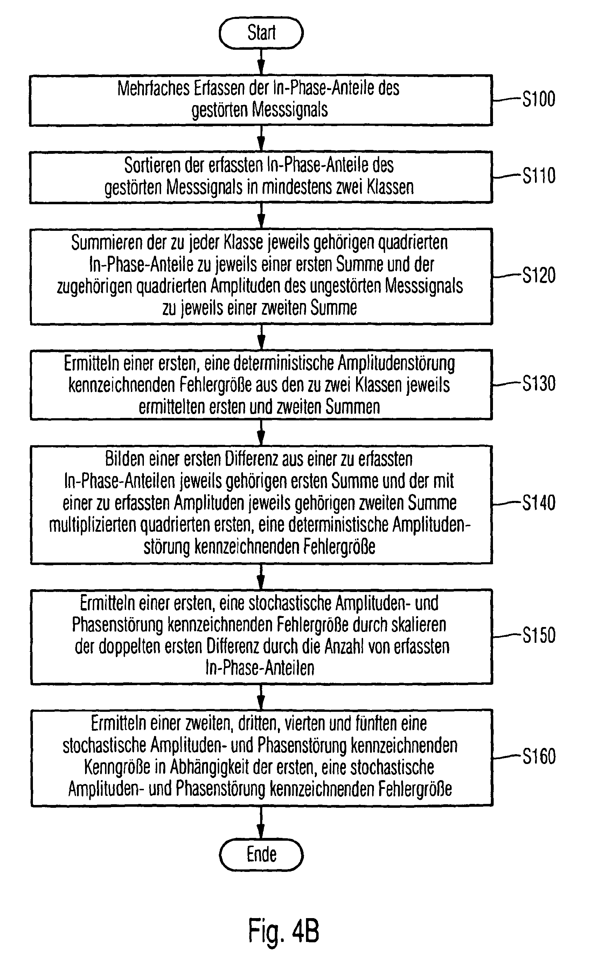

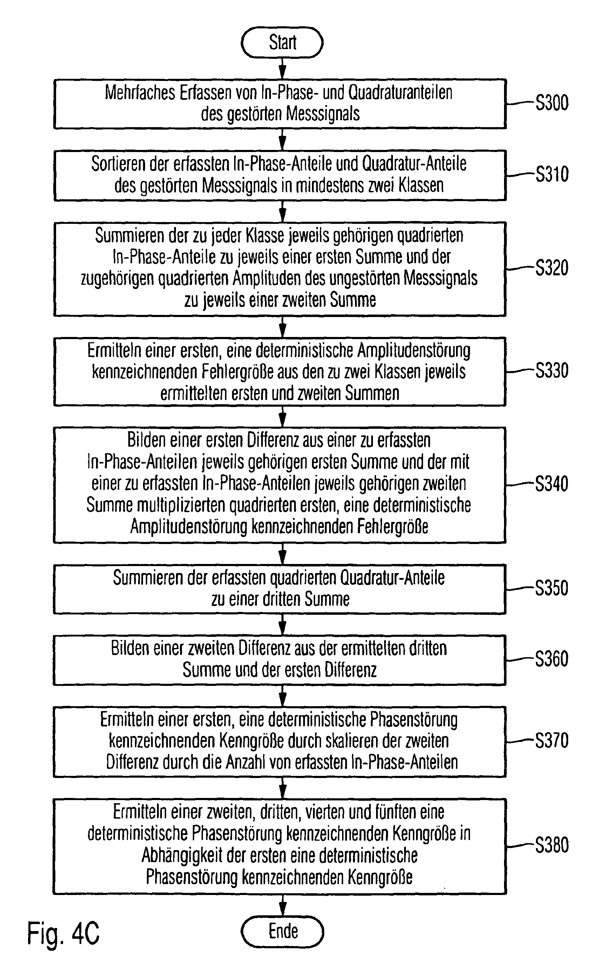

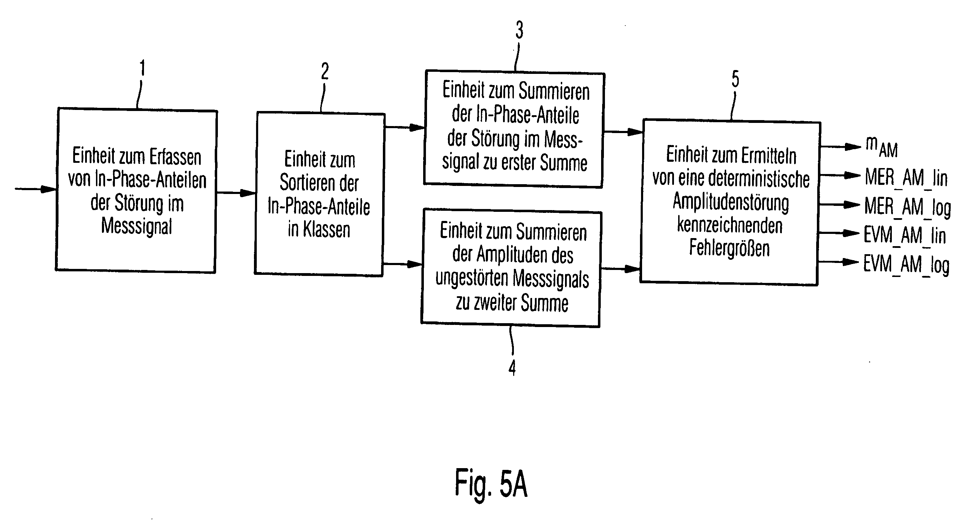

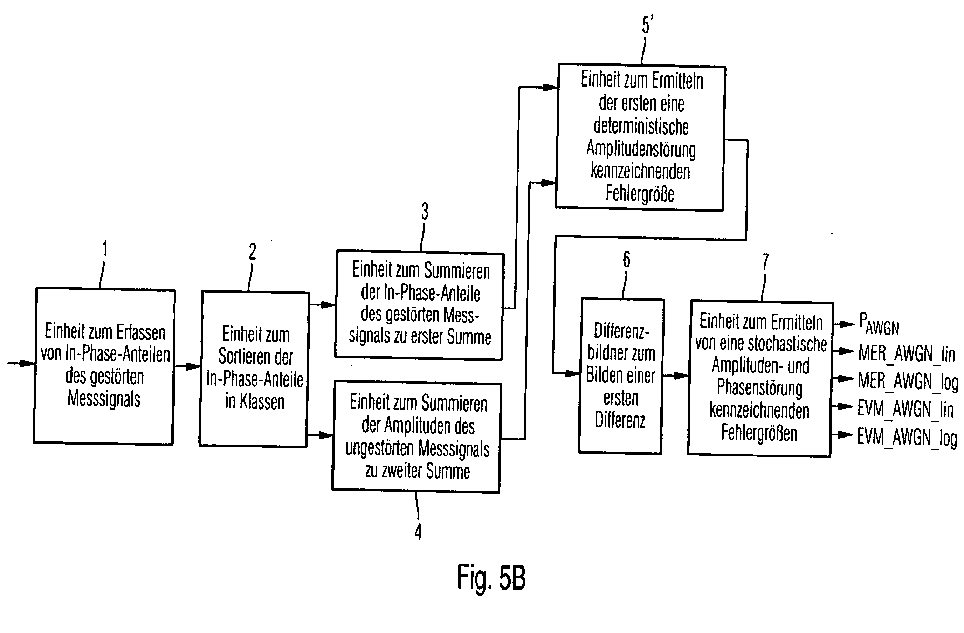

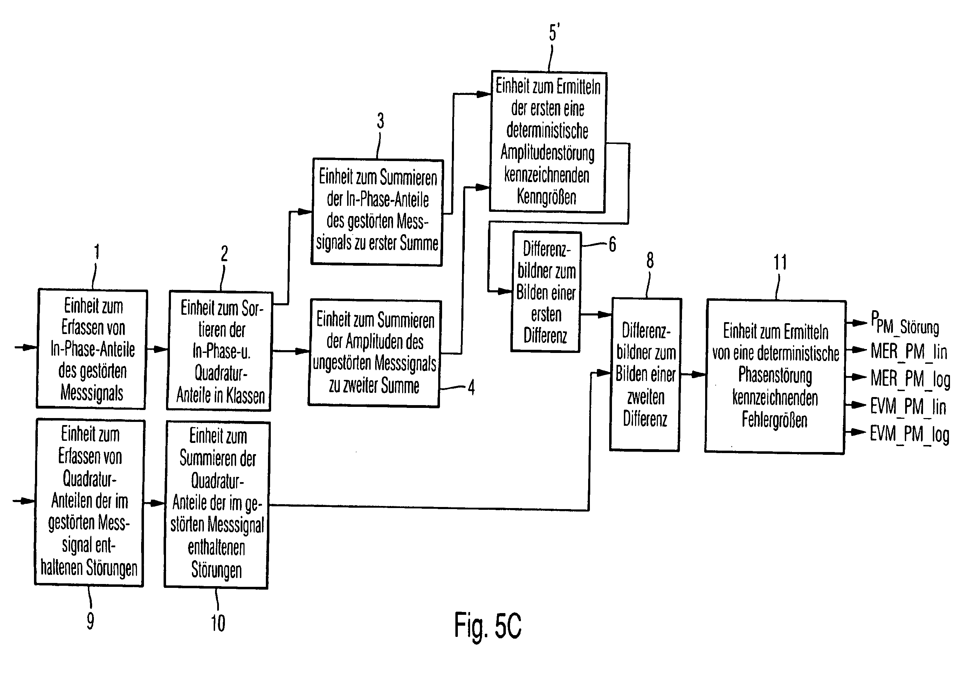

Aufbauend auf der mathematischen Herleitung werden im folgenden die erfindungsgemäßen Verfahren und erfindungsgemäßen Vorrichtungen anhand der Figuren 4A, 4B und 4C sowie 5A, 5B und 5C vorgestellt:

Im ersten Verfahrensschritt S10 des erfindungsgemäßen Verfahrens zum Ermitteln von eine deterministische Amplitudenstörung eines Messsignals jeweils kennzeichnenden Fehlergrößen gemäß dem Flussdiagramm in Fig. 4A werden in einer Einheit 1 zum Erfassen von In-Phase-Anteilen der im Messsignal enthaltenen Störung nach Demodulation des Messsignals, Entfernung des Restträgers und von Gleichanteilen aus dem I/Q-demodulierten Messsignal und Abtastung des Messsignals im Basisband über mehrere Abtastzeitpunkte, typischerweise über *n* Abtastzeitpunkte, das ungestörte Messsignal ermittelt.

Durch Differenzbildung des gestörten Messsignals zum zugehörigen ungestörten Messsignal werden in der Einheit 1 zum Erfassen von In-Phase-Anteilen der im Messsignal enthaltenen Störung der zugehörige Fehlervektor und daraus die zugehörigen In-Phase-Anteile $A_{Störung\text{-}I\text{-}i}$ der im abgetasteten und gestörten Messsignal enthaltenen Amplituden-Störung, die in Phase zum zugehörigen ungestörten Messsignal sind, bestimmt.

Im nächsten Verfahrensschritt S20 werden die erfassten In-Phase-Anteile $A_{Störung\text{-}I\text{-}i}$ der im abgetasteten und gestörten Messsignal enthaltenen Amplituden-Störung in einer Einheit 2 zum Sortieren der In-Phase-Anteile in mindestens zwei Klassen von In-Phase-Anteilen, typischerweise in zwei Klassen von In-Phase-Anteilen, sortiert, wobei als Sortierungskriterium die Größe der Amplitude $A_{Ideal\_I\text{-}i}$ des zugehörigen ungestörten Messsignals herangezogen wird. Werden zwei Klassen mit jeweils einer gleichen Anzahl von In-Phase-Anteilen verwendet, so ergibt sich eine Klasse mit zu großen Amplituden des ungestörten Messsignals jeweils gehörigen In-Phase-Anteilen $A_{Störung\text{-}I\text{-}i\text{-}\text{-}groß}$ der im gestörten Messsignal enthaltenen Störung und eine Klasse mit kleinen Amplituden des ungestörten Messsignals jeweils gehörigen In-Phase-Anteilen $A_{Störung\_I\text{-}i\_\text{Klein}}$ der im gestörten Messsignal enthaltenen Störung.

Im nächsten Verfahrensschritt S30 werden in einer Einheit 3 zum Summieren der In-Phase-Anteile der im Messsignal enthaltenen Störung zu einer ersten Summe die in jeder Klasse sortierten In-Phase-Anteile $A_{Störung\text{-}I\text{-}i\text{-}i\_groß}$ und $A_{Störung\text{-}I\text{-}i\_klein}$ der im abgetasteten und gestörten Messsignal enthaltenen Amplituden-Störung nach einer Quadrierung zu jeweils einer ersten Summe und $\sum_{i=1}^{k} A^2_{Störung\_I\_i\_groß}$ und $\sum_{i=1}^{k} A^2_{Störung\_I\_i\_klein}$ aufsummiert. Außerdem werden im Verfahrensschritt S30 in einer Einheit 4 zum Summieren der Amplituden des ungestörten Messsignals zu einer zweiten Summe die in zu jeder Klasse gehörigen Amplituden $A_{Ideal\_I\_i\_groß}$ und $A_{Ideal\_I\_i\_klein}$ des ungestörten Messsignals nach einer Quadrierung zu jeweils einer zweiten Summe $\sum_{i=1}^{k} A^2_{Ideal\_I\_i\_groß}$ und $\sum_{i=1}^{k} A^2_{Ideal\_I\_i\_klein}$ aufsummiert.

Im nächsten Verfahrensschritt S40 wird in einer Einheit 5 zum Ermitteln von eine deterministische Amplitudenstörung jeweils kennzeichnenden Fehlergrößen eine erste, eine deterministische Amplitudenstörung kennzeichnende Fehlergröße $m_{AM}$ aus den jeweils ermittelten ersten und zweiten Summen gemäß Gleichung (5) bestimmt.

Im abschließenden Verfahrensschritt S50 werden ebenfalls in der Einheit 5 zum Ermitteln von eine deterministische Amplitudenstörung jeweils kennzeichnenden Fehlergröße eine zweite, eine deterministische Amplitudenstörung kennzeichnende und einem linearen Modulationsfehlerverhältnis entsprechende Fehlergröße $MER\_AM\_lin$ gemäß Gleichung (8), eine dritte, eine deterministische Amplitudenstörung kennzeichnende und einem logarithmierten Modulationsfehlerverhältnis entsprechende Fehlergröße $MER\_AM\_log$ gemäß Gleichung (9), eine vierte, eine deterministische Amplitudenstörung kennzeichnende und einem linearen Fehlervektorverhältnis entsprechende Fehlergröße $EVM\_AM\_lin$ gemäß Gleichung (10) und eine fünfte, eine deterministische Amplitudenstörung kennzeichnende und einem logarithmierten Fehlervektorverhältnis entsprechende Fehlergröße $EVM\_AM\_log$ gemäß Gleichung (11) in Abhängigkeit der im vorherigen Verfahrensschritt S40 ermittelten ersten, eine deterministische Amplitudenstörung kennzeichnenden Fehlergröße $m_{AM}$ bestimmt .

Zur Bestimmung der zweiten und dritten Fehlergröße wird die mittlere Signalleistung $P_{Signal}$ des ungestörten Messsignals gemäß Gleichung (7) aus den typischerweise *n* erfassten Abtastwerten des ungestörten Messsignals ermittelt. Zur Bestimmung der vierten und fünften Fehlergröße wird die maximale Signalleistung $P_{Signal\_Max}$ gemäß Gleichung (9) aus den typischerweise *n* erfassten Abtastwerten des ungestörten Messsignals ermittelt.

Das erfindungsgemäße Verfahren zum Ermitteln von eine stochastische Amplituden- und gleichzeitig Phasenstörung jeweils kennzeichnenden Fehlergröße gemäß dem Flussdiagramm in Fig. 4B entspricht in seinen ersten vier Verfahrensschritten S100, S110, S120 und S130 den ersten Verfahrensschritten S10, S20, S30 und S40 des erfindungsgemäßen Verfahrens zum Ermitteln von eine deterministische Amplitudenstörung jeweils kennzeichnenden Fehlergrößen. Einzig die Ermittlung der ersten, eine deterministische Amplitudenstörung kennzeichnende Fehlergröße $m_{AM}$ erfolgt in Verfahrensschritt S130 in einer in Fig. 5B dargestellten Einheit 5' zum Ermitteln der ersten, eine deterministische Amplitudenstörung kennzeichnenden Fehlergröße. Auf die wiederholende Beschreibung dieser Verfahrensschritte wird deshalb an dieser Stelle verzichtet und auf die korrespondierende Beschreibung zum erfindungsgemäßen Verfahren zum Ermitteln von eine deterministische Amplitudenstörung jeweils kennzeichnenden Fehlergrößen verwiesen.

Im nächsten Verfahrensschritt S140 wird in einem Differenzbildner 6 zum Bilden einer ersten Differenz gemäß Gleichung (18) die quadrierten und über typischerweise *n* Abtastwerte aufsummierten In-Phase-Anteile

$$\sum_{i=1}^{n} A^2_{AWGN\_I\_i}$$ der stochastischen Amplituden- und Phasenstörung die in Phase zur zugehörigen Amplitude $AI_{deal\text{-}I\text{-}i}$, des ungestörten Messsignals sind, als erste Differenz zwischen den n quadrierten und aufsummierten In-Phase-Anteilen

$$\sum_{i=1}^{n} A^2_{Störung\_I\_i}$$ der im gestörten Messsignal enthaltenen Störungen und der zugehörigen, mit der quadrierten ersten, eine deterministische Amplitudenstörung kennzeichnenden Fehlergröße $m_{AM}^2$ multiplizierten quadrierten und aufsummierten Amplituden $$\sum_{i=1}^{n} A^2_{Ideal\_I\_i}$$ des ungestörten Messsignals ermittelt.

Im nächsten Verfahrensschritt S150 wird in einer Einheit 7 zum Ermitteln von eine stochastische Amplituden- und gleichzeitig Phasenstörung jeweils kennzeichnenden Fehlergrößen die Leistung $P_{AWGN}$ der stochastischen Amplituden- und gleichzeitig stochastischen Phasenstörung, die die erste, eine stochastische Amplituden- und Phasenstörung kennzeichnende Fehlergröße darstellt, durch n Normierung der ersten Differenz $$\sum_{i=1}^{n} A^2_{AWGN\_I\_i}$$ durch die Anzahl $n$

von erfassten In-Phase-Anteilen gemäß Gleichung (13) bestimmt.

Im abschließenden Verfahrensschritt S160 wird in der Einheit 7 zum Ermitteln von eine stochastische Amplituden- und gleichzeitig Phasenstörung jeweils kennzeichnenden Fehlergrößen die zweite, eine stochastische Amplituden- und gleichzeitig Phasenstörung kennzeichnende und einer einem linearen Modulationsfehlerverhältnis entsprechenden Fehlergröße *MER_AWGN_lin* gemäß Gleichung (14), die dritte, eine stochastische Amplituden- und Phasenstörung kennzeichnende und einem logarithmierten Modulationsfehlerverhältnis entsprechende Fehlergröße *MER_AWGN_log* gemäß Gleichung (15), die vierte, eine stochastische Amplituden- und Phasenstörung kennzeichnende und einem linearen Fehlervektorverhältnis entsprechende Fehlergröße *EVM_AWGN_lin* gemäß Gleichung (16) und die fünfte, eine stochastische Amplituden- und Phasenstörung kennzeichnende und einem logarithmierten Fehlervektorverhältnis entsprechende Fehlergröße *EVM_AWGN_log* gemäß Gleichung (17) in Abhängigkeit der im vorherigen Verfahrensschritt S150 bestimmten ersten, eine stochastische Amplituden- und Phasenstörung kennzeichnenden Fehlergröße $P_{AWGN}$ ermittelt.

Im erfindungsgemäßen Verfahren zum Ermitteln von eine deterministische Phasenstörung jeweils kennzeichnenden Fehlergrößen gemäß dem Flussdiagramm in Fig. 4C entsprechen die ersten fünf Verfahrensschritte S300, S310, S320, S330 und S340 den ersten fünf Verfahrensschritten S200, S210, S220, S230 und S240 des erfindungsgemäßen Verfahrens zum Ermitteln von eine stochastische Amplituden- und Phasenstörung jeweils kennzeichnenden Fehlergrößen und werden deshalb an dieser Stelle nicht wiederholt beschrieben. Das Blockdiagramm der entsprechenden Vorrichtung ist in Fig. 5C dargestellt.

Im nächsten Verfahrensschritt S350 werden in einer Einheit 8 zum Erfassen von Quadratur-Anteilen der im gestörten Messsignal enthaltenen Störung die insgesamt $n$ Quadratur-Anteile $A_{Störung\text{-}Ideal\_Q}$ der im gestörten Messsignal enthaltenen Störungen, die sich jeweils aus den Differenzen zwischen gestörten und ungestörten Messsignal ergeben, erfasst. Die Quadratur-Anteile der im gestörten Messsignal enthaltenen Störungen sind diejenigen Anteile der im gestörten Messsignal enthaltenen Störungen, deren Phasen orthogonal zu den Phasen der zugehörigen ungestörten Messsignale liegen. Im gleichen Verfahrensschritt S350 werden die einzelnen erfassten Quadratur-Anteile $A_{Störung\text{-}Ideal\_Q}$ der im gestörten Messsignal enthaltenen Störungen in einer Einheit 10 zum Summieren der Quadratur-Anteile der im gestörten Messsignal enthaltenen Störungen quadriert und zu einer dritten Summe $$\sum_{i=1}^{n} A^2_{Störung\text{-}Ideal\_Q}$$

aufsummiert .

Im nächsten Verfahrensschritt S360 wird in einem Differenzbildner 8 zum Bilden einer zweiten Differenz eine n n zweite Differenz $$\sum_{i=1}^{n} A^2_{Störung\text{-}Ideal\_Q} - \sum_{i=1}^{n} A^2_{AWGN\_I}$$ zwischen der im vorherigen Verfahrensschritt S150 ermittelten dritten n Summe $$\sum_{i=1}^{n} A^2_{Störung\text{-}Ideal\_Q}$$ und der im Verfahrensschritt S340 ermittelten ersten Differenz

$$\sum_{i=1}^{n} A^2_{AWGN\_I\_i}$$ bestimmt.

Im darauffolgenden Verfahrensschritt S370 wird in einer Einheit 11 zum Ermitteln von eine deterministische Phasenstörung kennzeichnenden Fehlergröße die Leistung $P_{PM\text{-}Störung}$ der deterministischen Phasenstörung, die die erste, eine deterministische Phasenstörung kennzeichnende Fehlergröße darstellt, gemäß Gleichung (19) durch Normierung der zweiten Differenz $\sum_{i=1}^{n} A^2_{Störung-Ideal\_Q} - \sum_{i=1}^{n} A^2_{AWGN\_I}$ mit der Anzahl *n* von erfassten In-Phase-Anteilen bestimmt.

Im abschließenden Verfahrensschritt S380 wird ebenfalls in der Einheit 11 zum Ermitteln von eine deterministische Phasenstörung kennzeichnenden Fehlergröße die zweite, eine deterministische Phasenstörung kennzeichnende und einem linearen Modulationsfehlerverhältnis entsprechende Fehlergröße *MER_PM_lin* gemäß Gleichung (20), die dritte, eine deterministische Phasenstörung kennzeichnende und einem logarithmierten Modulationsfehlerverhältnis entsprechende Fehlergröße *MER_PM_log* gemäß Gleichung (21), die vierte, eine deterministische Phasenstörung kennzeichnende und einem linearen Fehlervektorverhältnis entsprechende Fehlergröße *EVM_PM_lin* gemäß Gleichung (22) und die fünfte, eine deterministische Phasenstörung kennzeichnende und einem logarithmierten Fehlervektorverhältnis entsprechende Fehlergröße *EVM_PM_log* gemäß Gleichung (23) in Abhängigkeit der im vorherigen Verfahrensschritt S370 bestimmten ersten, eine deterministische Phasenstörung kennzeichnenden Fehlergröße $P_{PM\_Störung}$ ermittelt.

Die Erfindung ist nicht auf die dargestellte Ausführungsform der einzelnen erfindungsgemäßen Verfahren und erfindungsgemäßen Vorrichtungen beschränkt. Von der Erfindung sind insbesondere alle einträgermodulierte Messsignale, insbesondere quadraturamplitudenmodulierte (QAM-modulierte) und restseitenbandmodulierte (VSBmodulierte) Messsignale, abgedeckt.

## Patentansprüche

1. Verfahren zum Ermitteln von eine deterministische Amplitudenstörung eines Messsignals jeweils kennzeichnenden Fehlergrößen mit folgenden Verfahrensschritten:

   • Erfassen von In-Phase-Anteilen ($A_{Störung\_I\_i}$) von im gestörten Messsignal enthaltenen Störungen, die eine identische Phase zum ungestörten Messsignal aufweisen,
   • Sortieren der erfassten In-Phase-Anteile ($A_{Störung\_I\_i}$) entsprechend der Größe des In-Phase-Anteils ($A_{Ideal\_I\_i}$) des jeweiligen ungestörten Messsignals in mindestens zwei Klassen von In-Phase-Anteilen ($A_{Ideal\_I\_i\_groß}$, $A_{Störung\_I\_i\_groß}$, $A_{Ideal\_I\_i\_klein}$, $A_{Störung\_I\_i\_klein}$),
   • Summieren der zu jeweils einer Klasse gehörigen quadrierten In-Phase-Anteile ($A^2_{Störung\_I\_i\_groß}$, $A^2_{Störung\_I\_i\_klein}$) zu jeweils einer ersten Summe ($\sum_{i=1}^{k} A^2_{Störung\_I\_i\_groß}$, $\sum_{i=1}^{k} A^2_{Störung\_I\_i\_klein}$) und der zugehörigen quadrierten Amplituden ($A^2_{Ideal\_I\_i\_groß}$, $A^2_{Ideal\_I\_i\_klein}$) des ungestörten Messsignals zu jeweils einer zweiten Summe ($\sum_{i=1}^{g} A^2_{Ideal\_I\_i\_groß}$, $\sum_{i=1}^{k} A^2_{Ideal\_I\_i\_klein}$) und

   • Ermitteln einer ersten, eine Amplitudenstörung kennzeichnenden Fehlergröße ($m_{AM}$) aus den zu zwei Klassen jeweils ermittelten ersten und zweiten Summen

   $$\left( \sum_{i=1}^{k} A^2_{Störung\_I\_i\_groß}, \sum_{i=1}^{k} A^2_{Störung\_I\_i\_klein}, \sum_{i=1}^{g} A^2_{Ideal\_I\_i\_groß}, \sum_{i=1}^{k} A^2_{Ideal\_I\_i\_klein} \right).$$

2. Verfahren nach Anspruch 1,
   **dadurch gekennzeichnet,**
   **dass** eine zweite, eine deterministische Amplitudenstörung kennzeichnende und einem linearen Modulationsfehlerverhältnis entsprechende Fehlergröße (*MER_AM_lin*) durch Quadrierung der ersten, eine deterministische Amplitudenstörung kennzeichnenden Fehlergröße ($m_{AM}$), Multiplizierung mit dem Mittelwert ($\sum_{i=1}^{k} A^2_{Ideal\_I\_i}$) über die zugehörigen quadrierten Amplituden ($A^2_{Ideal\_I\_i}$) des ungestörten Messsignals und Skalierung mit der mittleren Signalleistung ($\overline{P}_{Signal}$) des ungestörten Messsignals ermittelt wird.

**3.** Verfahren nach Anspruch 2,
**dadurch gekennzeichnet,**
**dass** eine dritte, eine deterministische Amplitudenstörung kennzeichnende und einem logarithmierten Modulationsfehlerverhältnis entsprechende Fehlergröße (*MER_AM_*log) durch Invertierung und Logarithmierung der zweiten eine deterministische Amplitudenstörung kennzeichnende Fehlergröße (*MER_AM_lin*) ermittelt wird.

**4.** Verfahren nach einem der Ansprüche 1 bis 3,
**dadurch gekennzeichnet,**
**dass** eine vierte, eine deterministische Amplitudenstörung kennzeichnende und einem linearen Fehlervektorverhältnis entsprechende Fehlergröße (*EVM_AM_lin*) durch Quadrierung der ersten, eine deterministische Amplitudenstörung kennzeichnenden Fehlergröße ($m_{AM}$), Multiplizierung mit dem Mittelwert ( $\sum\limits_{i=1}^{n} A^2_{Ideal\_1\_i}$ ) über die zugehörigen quadrierten ungestörten Amplituden ($A^2_{Ideal\_1\_i}$) und Skalierung mit der maximalen Signalleistung ($P_{Signal\_Max}$) des ungestörten Messsignals ermittelt wird.

**5.** Verfahren nach Anspruch 4,
**dadurch gekennzeichnet,**
**dass** eine fünfte, eine deterministische Amplitudenstörung kennzeichnende und einem logarithmierten Fehlervektorverhältnis entsprechende Fehlergröße (*EVM_AM_l*og) durch Invertierung und Logarithmierung der vierten, eine deterministische Amplitudenstörung kennzeichnenden Fehlergröße (*EVM_AM_lin*) ermittelt wird.

**6.** Verfahren zum Ermitteln von eine stochastische Amplituden- und Phasenstörung eines Messsignals jeweils kennzeichnenden Fehlergrößen mit folgenden Verfahrensschritten:

   • Ermitteln einer ersten, eine deterministische Amplitudenstörung kennzeichnenden Fehlergröße ($m_{AM}$) gemäß Anspruch 1,

   • Bilden einer ersten Differenz aus einer zu erfassten n In-Phase-Anteilen gehörigen ersten Summe ( $\sum\limits_{i=1}^{n} A^2_{St\ddot{o}rung\_1\_i}$ ) gemäß Anspruch 1 und der mit einer zu erfassten Amplituden n gehörigen zweiten Summe ( $\sum\limits_{i=1}^{n} A^2_{Ideal\_1\_i}$ ) gemäß Anspruch 1 multiplizierten quadrierten ersten, eine deterministische Amplitudenstörung kennzeichnenden Fehlergröße ($m_{AM}$) und

   • Ermitteln einer ersten, eine stochastische Amplituden- und Phasenstörung kennzeichnenden Kenngröße ($P_{AWGN}$) durch Skalieren der doppelten ersten Differenz mit der Anzahl ($n$) von erfassten In-Phase-Anteilen oder Amplituden.

**7.** Verfahren nach Anspruch 6,
**dadurch gekennzeichnet,**
**dass** eine zweite, eine stochastische Amplituden- und Phasenstörung kennzeichnende und einem linearen Modulationsfehlerverhältnis entsprechende Fehlergröße (*MER_AWGN_lin*) durch Skalierung der ersten, eine stochastische Amplituden- und Phasenstörung kennzeichnenden Kenngröße ($P_{AWGN}$) mit der mittleren Signalleistung ($\overline{P}_{Signal}$) des ungestörten Messsignals ermittelt wird.

**8.** Verfahren nach Anspruch 7,
**dadurch gekennzeichnet,**
**dass** eine dritte, eine stochastische Amplituden- und Phasenstörung kennzeichnende und einem logarithmierten Modulationsfehlerverhältnis entsprechende Fehlergröße (*MER_AWGN_log*) durch Invertierung und Logarithmierung der zweiten, eine stochastische Amplituden- und Phasenstörung kennzeichnende Fehlergröße (*MER_AWGN_lin*) ermittelt wird.

**9.** Verfahren nach einem der Ansprüche 6 bis 8,
**dadurch gekennzeichnet,**
**dass** eine vierte, eine stochastische Amplituden- und Phasenstörung kennzeichnende und einem linearen Fehlervektorverhältnis entsprechende Fehlergröße (*EVM_AWGN_lin*) durch Skalierung der ersten, eine stochastische Amplituden- und Phasenstörung kennzeichnenden Kenngröße (*MER_AWGN_lin*) mit der maximalen Signalleistung ($P_{Signal\_Max}$) des ungestörten Messsignals ermittelt wird.

10. Verfahren nach Anspruch 9,
    **dadurch gekennzeichnet,**
    **dass** eine fünfte, eine stochastische Amplituden- und Phasenstörung kennzeichnende und einem logarithmierten Fehlervektorverhältnis entsprechende Fehlergröße (*EVM_AWGN_log*) durch Invertierung und Logarithmierung der vierten, eine stochastische Amplituden- und Phasenstörung kennzeichnenden Fehlergröße (*MER_AWGN_lin*) ermittelt wird.

11. Verfahren zum Ermitteln von eine deterministische Phasenstörung eines Messsignals jeweils kennzeichnenden Fehlergrößen mit folgenden Verfahrensschritten:

    • Ermitteln einer ersten, eine deterministische Amplitudenstörung kennzeichnenden Fehlergröße ($m_{AM}$) gemäß Anspruch 1 ,

    • Bilden einer ersten Differenz aus einer zu erfassten n In-Phase-Anteilen gehörigen ersten Summe $\left( \sum_{i=1}^{n} A^2_{Störung\_I\_i} \right)$ gemäß Anspruch 1 und der mit einer zu erfassten Amplituden gehörigen zweiten Summe $\left( \sum_{i=1}^{n} A^2_{Ideal\_I\_i} \right)$ gemäß Anspruch 1 multiplizierten quadrierten ersten, eine deterministische Amplitudenstörung kennzeichnenden Fehlergröße ($m_{AM}$),

    • Erfassen eines zur im gestörten Messsignal enthaltenen Störung gehörigen Quadratur-Anteils ($A_{Störung-Ideal\_Q}$), dessen Phase orthogonal zur Phase des ungestörten Messsignals ist,

    • Bilden einer zweiten Differenz $\left( \sum_{i=1}^{n} A^2_{Störung-Ideal\_Q} - \sum_{i=1}^{n} A^2_{AWGN\_I} \right)$ aus einer dritten Summe $\left( \sum_{i=1}^{n} A^2_{Störung-Ideal\_Q} \right)$ von quadrierten erfassten Quadratur-Anteilen ($A^2_{Störung-Ideal\_Q}$) und der ersten Differenz und

    • Ermitteln einer ersten, eine deterministische Phasenstörung kennzeichnenden Fehlergröße ($P_{PM\_Störung}$) durch Skalieren der zweiten Differenz $\left( \sum_{i=1}^{n} A^2_{Störung-Ideal\_Q} - \sum_{i=1}^{n} A^2_{AWGN\_I} \right)$ mit der Anzahl (*n*) von In-Phase-Anteilen der verwendeten Klasse.

12. Verfahren nach Anspruch 11,
    **dadurch gekennzeichnet,**
    **dass** eine zweite, eine deterministische Phasenstörung kennzeichnende und einem linearen Modulationsfehlerverhältnis entsprechende Fehlergröße (*MER_PM_lin*) durch Skalierung der ersten, eine deterministische Phasenstörung kennzeichnenden Fehlergröße ($P_{PM\_Störung}$) mit der mittleren Signalleistung ($P_{Signal}$, *MER_AWGN_lin*,) des ungestörten Messsignals ermittelt wird.

13. Verfahren nach Anspruch 12,
    **dadurch gekennzeichnet,**
    **dass** eine dritte, eine deterministische Phasenstörung kennzeichnende und einem logarithmierten Modulationsfehlerverhältnis entsprechende Fehlergröße (*MER_PM_log*) durch Invertierung und Logarithmierung der zweiten, eine deterministische Phasenstörung kennzeichnenden Fehlergröße (*MER_PM_lin*) ermittelt wird.

14. Verfahren nach einem der Ansprüche 11 bis 13,
    **dadurch gekennzeichnet,**
    **dass** eine vierte, eine deterministische Phasenstörung kennzeichnende und einem linearen Fehlervektorverhältnis entsprechende Fehlergröße (*EVM_PM_lin*) durch Skalierung der ersten, eine deterministische Phasenstörung kennzeichnenden Fehlergröße ($P_{MP\_Störung}$) mit der maximalen Signalleistung ($P_{Signal\_Max}$) des ungestörten Messsignals ermittelt wird.

**15.** Verfahren nach Anspruch 14,
**dadurch gekennzeichnet,**
**dass** eine fünfte, eine deterministische Phasenstörung kennzeichnende und einem logarithmierten Fehlervektorverhältnis entsprechende Fehlergröße (*EVM_PM_log*) durch Invertierung und Logarithmierung der vierten, eine deterministische Phasenstörung kennzeichnenden Fehlergröße (*EVM_PM_lin*) ermittelt wird.

**16.** Vorrichtung zum Ermitteln von eine deterministische Amplitudenstörung eines Messsignals jeweils kennzeichnenden Fehlergrößen mit
einer Einheit (1) zum Erfassen von In-Phase-Anteilen ($A_{Störung\_I\_i}$) des gestörten Messsignals, die eine identische Phase zum ungestörten Merssignal aufweisen,
einer Einheit (2) zum Sortieren der erfassten In-Phase-Anteile ($A_{Störung\_I\_i}$) entsprechend der Größe des In-Phase-Anteils ($A_{Ideal\_I\_i}$) des jeweiligen ungestörten Messsignals in mindestens zwei Klassen von In-Phase-Anteilen ($A_{Ideal\_I\_i\_groß}$, $A_{Störung\_I\_i\_groß}$, $A_{Ideal\_I\_i\_klein}$, $A_{Storung\_I\_i\_klein}$),
Einheiten (3,4) zum Summieren der zu jeweils einer Klasse gehörigen quadrierten In-Phase-Anteile ($A_{Störung\_I\_i\_groß}$, $A_{Störung\_I\_i\_klein}$) des gestörten Messsignals zu jeweils einer ersten Summe und zum Summieren der zugehörigen quadrierten Amplituden ($A^2_{Ideal\_I\_i\_groß}$, $A^2_{Ideal\_I\_i\_klein}$) des ungestörten Messsignals zu jeweils einer zweiten Summe

$$( \sum_{i=1}^{g} A^2_{Ideal\_I\_i\_groß} , \sum_{i=1}^{k} A^2_{Ideal\_I\_i\_klein} ) \text{ und}$$

einer Einheit (4) zum Ermitteln von eine deterministische Amplitudenstörung jeweils kennzeichnenden Fehlergrößen ($m_{AM}$, *MER_AM_lin*, *MER_AM*_log, *EVM_AM_lin*, *EVM_AM*_log) aus den zu zwei Klassen jeweils ermittelten ersten und zweiten Summen $$( \sum_{i=1}^{k} A^2_{Störung\_I\_i\_groß} , \sum_{i=1}^{k} A^2_{Störung\_I\_i\_klein} ,$$

$$\sum_{i=1}^{g} A^2_{Ideal\_I\_i\_groß} , \sum_{i=1}^{k} A^2_{Ideal\_I\_i\_klein} ) .$$

**17.** Vorrichtung zum Ermitteln von eine stochastische Amplituden- und Phasenstörung eines Messsignals jeweils kennzeichnenden Fehlergrößen mit
einer Einheit (1) zum Erfassen von In-Phase-Anteilen ($A_{Störung\_I\_i}$) des gestörten Messsignals, die eine identische Phase zum ungestörten Merssignal aufweisen,
einer Einheit (2) zum Sortieren der erfassten In-Phase-Anteile ($A_{Störung\_I\_i}$) entsprechend der Größe des In-Phase-Anteils ($A_{Ideal\_I\_i}$) des jeweiligen ungestörten Messsignals in mindestens zwei Klassen von In-Phase-Anteilen ($A_{Ideal\_I\_i\_groß}$, $A_{Stödrung\_I\_i\_groß}$, $A_{Ideal\_I\_i\_klein}$, $A_{Störung\_I\_i\_klein}$),
Einheiten zum Summieren der zu jeweils einer Klasse gehörigen quadrierten In-Phase-Anteile ($A_{Störung\_I\_i\_groß}$, $A_{Störung\_I\_i\_klein}$) des gestörten Messsignals zu jeweils einer ersten Summe

$$( \sum_{i=1}^{k} A^2_{Störung\_I\_i\_groß} , \sum_{i=1}^{k} A^2_{Störung\_I\_i\_klein} ) \text{ und zum Summieren der zugehörigen quadrierten Amplitu-}$$

den ($A^2_{Ideal\_I\_i\_groß}$, $A^2_{Ideal\_I\_i\_klein}$) des ungestörten Messsignals zu jeweils einer zweiten Summe

$$( \sum_{i=1}^{g} A^2_{Ideal\_I\_i\_groß} , \sum_{i=1}^{k} A^2_{Ideal\_I\_i\_klein} ) ,$$

einer Einheit (5') zum Ermitteln einer ersten, eine deterministische Amplitudenstörung kennzeichnenden Fehlergröße ($m_{AM}$),
einem Differenzbildner (6) zum Bilden einer ersten Differenz aus einer zu erfassten In-Phase-Anteilen gehörigen

ersten Summe $$( \sum_{i=1}^{n} A^2_{Störung\_I\_i} )$$ und einer mit einer zu erfassten Amplituden gehörigen zweiten Summe n

$$( \sum_{i=1}^{n} A^2_{Ideal\_I\_i} )$$ multiplizierten quadrierten, ersten eine deterministische Amplitudenstörung kennzeichnenden Fehlergröße ($m_{AM}$) und

einer Einheit (7) zum Ermitteln von eine stochastische Amplituden- und Phasenstörung jeweils kennzeichnenden Kenngrößen ($P_{AWGN}$, *MER_AWGN_lin*, *MER_AWGN_log*, *EVM_AWGN_lin*, *EVM_AWGN_log*) durch Skalieren der doppelten ersten Differenz mit der Anzahl (n) von erfassten In-Phase-Anteilen.

**18.** Vorrichtung zum Ermitteln von eine deterministische Phasenstörung eines Messsignals jeweils kennzeichnenden Fehlergrößen mit

einer Einheit (1) zum Erfassen von In-Phase-Anteilen ($A_{Störung\_I\_i}$) des gestörten Messsignals, die eine identische Phase zum ungestörten Merssignal aufweisen,

einer Einheit (2) zum Sortieren der erfassten In-Phase-Anteile ($A_{Störung\_I\_i}$) entsprechend der Größe des In-Phase-Anteils ($A_{Ideal\_I\_i}$) des jeweiligen ungestörten Messsignals in mindestens zwei Klassen von In-Phase-Anteilen ($A_{Ideal\_I\_i\_groß}$, $A_{Störung\_I\_i\_groß}$, $A_{Ideal\_I\_i\_klein}$, $A_{Störung\_I\_i\_klein}$),

Einheiten (3,4) zum Summieren der zu jeweils einer Klasse gehörigen quadrierten In-Phase-Anteile ($A_{Störung\_I\_i\_groß}$, $A_{Störung\_I\_i\_klein}$) des gestörten Messsignals zu jeweils einer ersten Summe

$$( \sum_{i=1}^{k} A^2_{Störung\_I\_i\_groß} \ , \ \sum_{i=1}^{k} A^2_{Störung\_I\_i\_klein} )$$

und zum Summieren der zugehörigen quadrierten Amplituden ($A^2_{Ideal\_I\_i\_groß}$, $A^2_{Ideal\_I\_i\_klein}$) des ungestörten Messsignals zu jeweils einer zweiten Summe

$$( \sum_{i=1}^{g} A^2_{Ideal\_I\_i\_groß} \ , \ \sum_{i=1}^{k} A^2_{Ideal\_I\_i\_klein} ) \ ,$$

einer Einheit (5') zum Ermitteln einer ersten, eine deterministische Amplitudenstörung kennzeichnenden Fehlergröße ($m_{AM}$),

einem Differenzbildner (6) zum Bilden einer ersten Differenz aus einer zu erfassten Inphase-Anteilen gehörigen ersten Summe $( \sum_{i=1}^{n} A^2_{Störung\_I\_i} )$ und einer mit einer zu erfassenden Amplitude gehörigen zweiten Summe

$( \sum_{i=1}^{n} A^2_{Ideal\_I\_i} )$ multiplizierten quadrierten, ersten eine deterministische Amplitudenstörung kennzeichnenden Fehlergröße ($m_{AM}$),

einer Einheit (9) zum Erfassen von Quadratur-Anteilen ($A_{Störung\_Ideal\_Q}$) der im ungestörten Messsignal enthaltenen Störungen,

einer Einheit (10) zum Summieren der quadrierten Quadratur-Anteile ($A_{Störung-Ideal\_Q}$) der im ungestörten Messsignal enthaltenen Störungen zu einer dritten Summe $( \sum_{i=1}^{n} A^2_{Störung-Ideal\_Q} )$,

einem Differenzbildner (6) zum Bilden einer zweiten n n Differenz $( \sum_{i=1}^{n} A^2_{Störung-Ideal\_Q} - \sum_{i=1}^{n} A^2_{AWGN\_I} )$ aus der dritten Summe $( \sum_{i=1}^{n} A^2_{Störung-Ideal\_Q} )$ und der ersten Differenz und

einer Einheit (11) zum Ermitteln von jeweils eine deterministische Phasenstörung kennzeichnenden Fehlergrößen ($P_{PM\_Störung}$, $MER\_PM\_lin$, $MER\_PM\_log$, $EVM\_PM\_lin$, $EVM\_PM\_log$) durch Skalieren der zweiten Differenz $( \sum_{i=1}^{n} A^2_{Störung-Ideal\_Q} - \sum_{i=1}^{n} A^2_{AWGN\_I} )$ mit der Anzahl ($n$) der erfassten In-Phase-Anteile.

**Claims**

**1.** Method for determining error variables respectively characterizing a deterministic amplitude disturbance of a measurement signal, having the following method steps:

• acquiring in-phase components ($A_{Disturbance\_1\_i}$) of disturbances which are present in the disturbed measurement signal and have an identical phase with respect to the undisturbed measurement signal,
• sorting the determined in-phase components ($A_{Disturbance\_1\_i}$) in accordance with the magnitude of the in-phase component ($A_{Ideal\_1\_i}$) of the respective undisturbed measurement signal into at least two classes of in-phase components ($A_{Ideal\_1\_i}$ large, $A_{Disturbance\_1\_i\_larger}$, $A_{Ideal\_I\_i\_small}$, $A_{Disturbance\_1\_i\_small}$),
• summing the squared in-phase components ($A^2_{Disturbance\_1\_i\_larger}$, $A^2_{Disturbance\_1\_i\_small}$) respectively belonging to one class to respectively produce a first sum $\sum_{i=1}^{k} A^2_{Disturbance\_1\_i\_large})$

$\sum_{i=1}^{k} A^2_{Disturbance\_1\_i\_small})$, and the associated squared amplitudes $(A^2_{Ideal\_1\_i}$ large,

$A^2_{Ideal\_1\_i\_small})$ of the undisturbed measurement signal to respectively produce a second sum

$(\sum_{i=1}^{g} A^2_{Ideal\_1\_i\_large}, \quad \sum_{i=1}^{k} A^2_{Ideal\_1\_i\_small})$, and

• determining a first error variable ($m_{AM}$) characterizing an amplitude disturbance from the first and second sums

$(\sum_{i=1}^{k} A^2_{Disturbance\_1\_i\_large}, \quad \sum_{i=1}^{k} A^2_{Disturbance\_1\_i\_small}, \quad \sum_{i=1}^{g} A^2_{Ideal\_1\_i\_large},$

$\sum_{i=1}^{k} A^2_{Ideal\_1\_i\_small})$ respectively determined with reference to two classes.

2. Method according to Claim 1, **characterized in that** a second error variable (*MER_AM_lin*) characterizing a deterministic amplitude disturbance and corresponding to a linear modulation error ratio is determined by squaring the first error variable *($m_{AM}$)* characterizing a deterministic amplitude disturbance, multiplying by the mean value

$(\sum_{i=1}^{n} A^2_{Ideal\_1\_i})$ over the associated squared amplitudes ($A^2_{Ideal\_1\_i}$) of the undisturbed measurement signal, and scaling with the mean signal power ($\overline{P}_{Signal}$) of the undisturbed measurement signal.

3. Method according to Claim 2, **characterized in that** a third error variable (*MER_AM_log*) characterizing a deterministic amplitude disturbance and corresponding to a logarithmized modulation error ratio is determined by inverting and logarithmizing the second error variable (*MER_AM_lin*) characterizing a deterministic amplitude disturbance.

4. Method according to one of Claims 1 to 3, **characterized in that** a fourth error variable (*EVM_AM_lin*) characterizing a deterministic amplitude disturbance and corresponding to a linear error vector ratio is determined by squaring the first error variable ($m_{AM}$) characterizing a deterministic amplitude disturbance, multiplying by the mean value

$(\sum_{i=1}^{n} A^2_{Ideal\_1\_i})$ over the associated squared undisturbed amplitudes ($A^2_{Ideal\_1\_i}$), and scaling with the maximum signal power ($P_{Signal\_max}$) of the undisturbed measurement signal.

5. Method according to Claim 4, **characterized in that** a fifth error variable (*EVM_AM_log*) characterizing a deterministic amplitude disturbance and corresponding to a logarithmized error vector ratio is determined by inverting and logarithmizing the fourth error variable (*EVM_AM_lin*) characterizing a deterministic amplitude disturbance.

6. Method for determining error variables respectively characterizing a stochastic amplitude and phase disturbance of a measurement signal, having the following method steps:

• determining a first error variable ($m_{AM}$) characterizing a deterministic amplitude disturbance in accordance with Claim 1,

• forming a first difference from a first sum $(\sum_{i=1}^{n} A^2_{Disturbance\_1\_i})$ belonging to acquired in-phase components in accordance with Claim 1, and the squared first error variable ($m_{AM}$) characterizing a deterministic amplitude disturbance and multiplied by a second sum $(\sum_{i=1}^{n} A^2_{Ideal\_1\_i})$ in accordance with Claim 1 belonging to acquired amplitudes, and
• determining a first characteristic ($P_{AWGN}$) characterizing a stochastic amplitude and phase disturbance by scaling the doubled first difference with the number ($n$) of acquired in-phase components or amplitudes.

7. Method according to Claim 6, **characterized in that** a second error variable ($MER\_AWGN\_lin$) characterizing a stochastic amplitude and phase disturbance and corresponding to a linear modulation error ratio is determined by scaling the first characteristic ($P_{AWGN}$) characterizing a stochastic amplitude and phase disturbance with the mean signal power ($\overline{P}_{Signal}$) of the undisturbed measurement signal.

8. Method according to Claim 7, **characterized in that** a third error variable ($MER\_AWGN\_log$) characterizing a stochastic amplitude and phase disturbance and corresponding to a logarithmized modulation error ratio is determined by inverting and logarithmizing the second error variable ($MER\_AWGN\_lin$) characterizing a stochastic amplitude and phase disturbance.

9. Method according to one of Claims 6 to 8, **characterized in that** a fourth error variable ($EVM\_AWGN\_lin$) characterizing a stochastic amplitude and phase disturbance and corresponding to a linear error vector ratio is determined by scaling the first characteristic ($MER\_AWGN\_lin$) characterizing a stochastic amplitude and phase disturbance with the maximum signal power ($P_{Signal\_Max}$) of the undisturbed measurement signal.

10. Method according to Claim 9, **characterized in that** a fifth error variable ($EVM\_AWGN\_log$) characterizing a stochastic amplitude and phase disturbance and corresponding to a logarithmized error vector ratio is determined by inverting and logarithmizing the fourth error variable ($MER\_AWGN\_lin$) characterizing a stochastic amplitude and phase disturbance.

11. Method for determining error variables respectively characterizing a deterministic phase disturbance of a measurement signal, having the following method steps:

   • determining a first error variable ($m_{AM}$) characterizing a deterministic amplitude disturbance in accordance with Claim 1,

   • forming a first difference from a first sum $(\sum_{i=1}^{n} A^2_{Disturbance\_1\_i})$ belonging to acquired in-phase components in accordance with Claim 1, and the squared first error variable ($m_{AM}$) characterizing a deterministic amplitude disturbance and multiplied by a second sum $(\sum_{i=1}^{n} A^2_{Ideal\_1\_i})$ in accordance with Claim 1 belonging to acquired amplitudes,
   • determining a quadrature component ($A_{Disturbance\text{-}Ideal\_Q}$) belonging to the disturbance present in the disturbed measurement signal, the phase of which quadrature component is orthogonal to the phase of the undisturbed measurement signal,

   • forming a second difference $(\sum_{i=1}^{n} A^2_{Disturbance\text{-}Ideal\_Q} - \sum_{i=1}^{n} A^2_{AWGN\_1})$ from a third sum

   $(\sum_{i=1}^{n} A^2_{Disturbance\text{-}Ideal\_Q})$ of squared acquired quadrature components ($A^2_{Disturbance\text{-}Ideal\_Q}$) and the first difference, and
   • determining a first error variable ($P_{PM\_Disturbance}$) characterizing a deterministic phase disturbance by scaling the second difference $(\sum_{i=1}^{n} A^2_{Disturbance\text{-}Ideal\_Q} - \sum_{i=1}^{n} A^2_{AWGN\_1})$ with the number ($n$) of in-phase components of the class used.

**12.** Method according to Claim 11, **characterized in that** a second error variable (*MER_PM_lin*) characterizing a deterministic phase disturbance and corresponding to a linear modulation error ratio is determined by scaling the first error variable ($P_{PM\_Disturbance}$) characterizing a deterministic phase disturbance with the mean signal power ($P_{Signal}$, *MER_AWGN_lin*) of the undisturbed measurement signal.

**13.** Method according to Claim 12, **characterized in that** a third error variable (*MER_PM_log*) characterizing a deterministic phase disturbance and corresponding to a logarithmized modulation error ratio is determined by inverting and logarithmizing the second error variable (*MER_PM_lin*) characterizing a deterministic phase disturbance.

**14.** Method according to one of Claims 11 to 13, **characterized in that** a fourth error variable (*EVM_PM_lin*) characterizing a deterministic phase disturbance and corresponding to a linear error vector ratio is determined by scaling the first error variable ($P_{PM\_Disturbance}$) characterizing a deterministic phase disturbance with the maximum signal power ($P_{Signal-Max}$) of the undisturbed measurement signal.

**15.** Method according to Claim 14, **characterized in that** a fifth error variable (*EVM_PM_log*) characterizing a deterministic phase disturbance and corresponding to a logarithmized error vector ratio is determined by inverting and logarithmizing the fourth error variable (*EVM_PM_lin*) characterizing a deterministic phase disturbance.

**16.** Device for determining error variables respectively characterizing a deterministic amplitude disturbance of a measurement signal, having

a unit (1) for acquiring in-phase components ($A_{Disturbance\_1\_i}$) of the disturbed measurement signal, which have an identical phase with respect to the undisturbed measurement signal,

a unit (2) for sorting the acquired in-phase components ($A_{Disturbance\_1\_i}$) in accordance with the magnitude of the in-phase component ($A_{Ideal\_1\_i}$) of the respective undisturbed measurement signal into at least two classes of in-phase components ($A_{Ideal\_1\_i\_larger}$, $A_{Disturbance\_1\_i\_large}$, $A_{Ideal\_1\_i\_small}$, $A_{Disturbance\_1\_i\_small}$),

units (3, 4) for summing the squared in-phase components ($A_{Disturbance\_1\_i\_large}$, $A_{Disturbance\_1\_i\_small}$), respectively belonging to one class, of the disturbed measurement signal to respectively produce a first sum, and for summing the associated squared amplitudes ($A^2_{Ideal\_1\_i\_large}$, $A^2_{Ideal\_1\_i\_small}$) of the undisturbed measurement signal to respectively produce a second sum $\left( \sum_{i=1}^{q} A^2_{Ideal\_1\_i\_large}, \quad \sum_{i=1}^{k} A^2_{Ideal\_1\_i\_small} \right)$ and

a unit (4) for determining error variables ($m_{AM}$, *MER_AM_lin*, *MER_AM_log*, *EVM AM lin*, *EVM_AM_log*) respectively characterizing a deterministic amplitude disturbance from the first and second sums

$$\left( \sum_{i=1}^{k} A^2_{Disturbance\_1\_i\_large}, \qquad \sum_{i=1}^{k} A^2_{Disturbance\_1\_i\_small}, \qquad \left( \sum_{i=1}^{q} A^2_{Ideal\_1\_i\_large}, \right. \right.$$

$$\left. \sum_{i=1}^{k} A^2_{Ideal\_1\_i\_small} \right) \text{ respectively determined with reference to two classes.}$$

**17.** Device for determining error variables respectively characterizing a stochastic amplitude and phase disturbance of a measurement signal, having

a unit (1) for acquiring in-phase components ($A_{Disturbance\_1\_i}$) of the disturbed measurement signal, which have an identical phase with respect to the undisturbed measurement signal,

a unit (2) for sorting the acquired in-phase components ($A_{Disturbance\_1\_i}$) in accordance with the magnitude of the in-phase component ($A_{Ideal\_1\_i}$) of the respective undisturbed measurement signal into at least two classes of in-phase components ($A_{Ideal\_1\_i\_large}$, $A_{Disturbance\_1\_i\_large}$, $A_{Ideal\_1\_i\_small}$, $A_{Disturbance\_1\_i\_small}$),

units for summing the squared in-phase components ($A_{Disturbance\_1\_i\_large}$, $A_{Disturbance\_1\_i\_small}$), respectively belonging to one class, of the disturbed measurement signal to respectively produce a first sum

$$\left( \sum_{i=1}^{k} A^2_{Disturbance\_1\_i\_large}, \left( \sum_{i=1}^{k} A^2_{Disturbance\_1\_i\_small}, \right) \right), \text{ and for summing the associated squared}$$

amplitudes ($A^2_{Idea\_1\_i\_large}$), $A^2_{Idea\_1\_i\_small}$) of the undisturbed measurement signal to respectively produce a second

$$\text{sum} \quad ( \sum_{i=1}^{q} A^{2}{}_{Ideal\_1\_i\_large},$$

$$\sum_{i=1}^{k} A^{2}{}_{Ideal\_1\_i\_small}),$$

a unit (5') for determining a first error variable ($m_{AM}$) characterizing a deterministic amplitude disturbance,

a subtractor (6) for forming a first difference from a first sum $( \sum_{i=1}^{n} A^{2}{}_{Disturbance\_1\_i} )$ belonging to acquired in-phase components, and a squared, first error variable ($m_{AM}$) characterizing a deterministic amplitude disturbance and multiplied by a second sum $( \sum_{i=1}^{n} A^{2}{}_{Ideal\_1\_i} )$ belonging to acquired amplitudes, and

a unit (7) for determining characteristics ($P_{AWGN}$, MER_AWGN_lin, MER_AWGN_log, EVM_AWGN_lin, EVM_AWGN_log) respectively characterizing a stochastic amplitude and phase disturbance by scaling the doubled first difference with the number ($n$) of acquired in-phase components.

18. Device for determining error variables respectively characterizing a deterministic phase disturbance of a measurement signal, having
a unit (1) for acquiring in-phase components ($A_{Disturbance\_1\_i}$) of the disturbed measurement signal, which have an identical phase with respect to the undisturbed measurement signal,
a unit (2) for sorting the acquired in-phase components ($A_{Disturbance\_1\_i}$) in accordance with the magnitude of the in-phase component ($A_{Ideal\_1\_i}$) of the respective undisturbed measurement signal into at least two classes of in-phase components ($A_{Ideal\_1\_i\_large}$, $A_{Disturbance\_1\_i\_large}$, $A_{Ideal\_1\_i\_small}$, $A_{Disturbance\_1\_i\_small}$),
units (3, 4) for summing the squared in-phase components ($A_{Disturbance\_1\_i\_large}$, $A_{Disturbance\_1\_i\_small}$), respectively belonging to one class, of the disturbed measurement signal to respectively produce a first sum

$$( \sum_{i=1}^{k} A^{2}{}_{Disturbance\_1\_i\_large} , \sum_{i=1}^{k} A^{2}{}_{Disturbance\_1\_i\_small} ) ,$$

and for summing the associated squared

amplitudes ($A^{2}{}_{Ideal\_1\_i\_large}$, $A^{2}{}_{Ideal\_1\_i\_small}$) of the undisturbed measurement signal to respectively produce a second

$$\text{sum} \quad ( \sum_{i=1}^{q} A^{2}{}_{Ideal\_1\_i\_large}, \quad \sum_{i=1}^{k} A^{2}{}_{Ideal\_1\_i\_small}),$$

a unit (5') for determining a first error variable ($m_{AM}$) characterizing a deterministic amplitude disturbance,

a subtractor (6) for forming a first difference from a first sum $( \sum_{i=1}^{n} A^{2}{}_{Disturbance\_1\_i} )$ belonging to acquired in-phase components, and a squared, first error variable ($m_{AM}$) characterizing a deterministic amplitude disturbance and multiplied by a second sum $( \sum_{i=1}^{n} A^{2}{}_{Ideal\_1\_i} )$ belonging to acquired amplitudes,

a unit (9) for acquiring quadrature components ($A_{Disturbance-Ideal\_Q}$) of the disturbances present in the undisturbed measurement signal,
a unit (10) for summing the squared quadrature components ($A_{Disturbance-Ideal\_Q}$) of the disturbances present in the undisturbed measurement signal to produce a third sum $( \sum_{i=1}^{n} A^{2}{}_{Disturbance-Ideal\_Q} ) ,$

a subtractor (6) for forming a second difference $( \sum_{i=1}^{n} A^{2}{}_{Disturbance-Ideal\_Q} \quad \sum_{i=1}^{n} A^{2}{}_{AWGN\_1} )$ from the third sum $\left( \sum_{i=1}^{n} A^2{}_{Disturbance-Ideal\_Q} \right)$ and the first difference, and

a unit (11) for determining error variables ($P_{PM\_Disturbance}$, MER_PM_lin, MER_PM_log, EVM_PM_lin, EVM_PM_log) respectively characterizing a deterministic phase disturbance by scaling the second difference

$\left( \sum_{i=1}^{n} A^2{}_{Disturbance-Ideal\_Q} \quad \sum_{i=1}^{n} A^2{}_{AWGN\_1} \right)$ with the number (n) of the acquired in-phase components.

## Revendications

1. Procédé pour détecter les tailles des défauts respectives caractérisant un défaut d'amplitude déterministe d'un signal de mesure comportant les étapes de procédé suivantes :

   • détermination des composantes en phase ($A_{Stbrung\_1\_i}$) des défauts contenus dans le signal de mesure perturbé, qui présentent une phase identique par rapport au signal de mesure non perturbé,
   • tri des composantes en phase détectées ($A_{störung\_1\_i}$) correspondant à la grandeur de la composante en phase ($A_{Ideal\_1\_i}$) du signal de mesure non perturbé dans au moins deux classes de composantes en phase ($A_{Ideal\_1\_i\_gro\beta}$, $A_{Störung\_1\_i\_gro\beta}$, $A_{Ideal\_1\_i\_klein}$, $A_{Störung\_1\_i\_klein}$),
   • addition des composantes en phase élevées au carré appartenant respectivement à une classe ($A^2{}_{Störung\_1\_i\_gro\beta}$, $A^2{}_{Störung\_1\_i\_klein}$) à une première somme respective $\left( \sum_{i=l}^{k} A^2{}_{Störung\_l\_i\_gro\beta}, \right.$ $\left. \sum_{i=l}^{k} A^2{}_{Störung\_l\_i\_klein} \right)$ et des amplitudes élevées au carré associées ($A^2{}_{Ideal\_1\_i\_gro\beta}$, $A^2{}_{Ideal\_1\_i\_klein}$) du signal de mesure non perturbé à une seconde somme respective $\left( \sum_{i=l}^{g} A^2{}_{Ideal\_l\_i\_gro\beta}, \right.$ $\left. \sum_{i=l}^{k} A^2{}_{Ideal\_l\_i\_klein} \right)$, et
   • détermination d'une première taille des défauts ($m_{AM}$) caractérisant un défaut d'amplitude à partir des premières et secondes sommes déterminées respectivement à partir des deux classes

   $\left( \sum_{i=l}^{k} A^2{}_{Störung\_l\_i\_gro\beta}, \quad \sum_{i=l}^{k} A^2{}_{Störung\_l\_i\_klein}, \sum_{i=l}^{g} A^2{}_{Ideal\_l\_i\_gro\beta}, \quad \sum_{i=l}^{k} A^2{}_{Ideal\_l\_i\_klein} \right)$.

2. Procédé selon la revendication 1, **caractérisé en ce que**
   une seconde taille des défauts caractérisant un défaut d'amplitude déterministe et correspondant à un rapport d'erreur de modulation linéaire (MER_AM_lin) est déterminée grâce à une élévation au carré de la première taille des défauts ($m_{AM}$) caractérisant un défaut d'amplitude déterministe, une multiplication par la moyenne $\left( \sum_{i=l}^{n} A^2{}_{Ideal\_l\_i} \right)$ sur les amplitudes élevées au carré associées ($A^2{}_{Ideal\_1\_i}$) du signal de mesure non perturbé et la scalarisation par la puissance de signal moyenne ($P_{Signal}$) du signal de mesure non perturbé.

3. Procédé selon la revendication 2, **caractérisé en ce que**
   une troisième taille des défauts (MER_AM_log) caractérisant un défaut d'amplitude déterministe et correspondant à un rapport d'erreur de modulation logarithmique est déterminée par inversion et logarithmisation de la seconde taille des défauts (MER_AM_lin) caractérisant un défaut d'amplitude déterministe.

4. Procédé selon l'une des revendications 1 à 3, **caractérisé en ce que**
   une quatrième taille des défauts (EVM_AM_lin) caractérisant un défaut d'amplitude déterministe et correspondant à un rapport de vecteur d'erreur linéaire est déterminée par une élévation au carré de la première taille des défauts ($m_{AM}$) caractérisant un défaut d'amplitude déterministe, une multiplication par la moyenne $\left( \sum_{i=l}^{n} A^2{}_{Ideal\_l\_i} \right)$ sur les amplitudes non perturbées élevées au carré associées ($A^2{}_{Ideal\_1\_i}$) et la scalarisation par la puissance de signal maximale ($P_{Signal\_Max}$) du signal de mesure non perturbé.

**5.** Procédé selon la revendication 4, **caractérisé en ce que**
une cinquième taille des défauts (EVM_AM_log) caractérisant un défaut d'amplitude déterministe et correspondant à un rapport de vecteur d'erreur logarithmique est déterminée par inversion et logarithmisation de la quatrième taille des défauts (EVM_AM_lin) caractérisant un défaut d'amplitude déterministe.

**6.** Procédé de détection des tailles des défauts respectives caractérisant un défaut d'amplitude et de phase stochastique d'un signal de mesure comportant les étapes de procédé suivantes :

• détermination d'une première taille des défauts (m_AM) caractérisant un défaut d'amplitude déterministe selon la revendication 1,

• formation d'une première différence à partir d'une première somme $(\sum_{i=l}^{n} A^2_{Störung\_l\_i})$ associée aux composantes en phase déterminées selon la revendication 1 et de la première taille des défauts (m_AM) caractérisant un défaut d'amplitude déterministe élevée au carré multipliée par une seconde somme $(\sum_{i=l}^{n} A^2_{Ideal\_l\_i})$ associée aux amplitudes déterminées selon la revendication 1, et

• détermination d'un premier paramètre (P_AWGN) caractérisant un défaut d'amplitude et de phase stochastique grâce à une scalarisation de la première différence doublée par le nombre (n) de composantes en phase ou d'amplitudes détectées.

**7.** Procédé selon la revendication 6, **caractérisé en ce que**
une seconde taille des défauts (MER_AWGN_lin) caractérisant un défaut d'amplitude et de phase stochastique et correspondant à un rapport d'erreur de modulation linéaire est déterminée par scalarisation du premier paramètre (P_AWGN) caractérisant un défaut d'amplitude et de phase stochastique par la puissance de signal moyenne ($\overline{P}_{Signal}$) du signal de mesure non perturbé.

**8.** Procédé selon la revendication 7, **caractérisé en ce que**
une troisième taille des défauts (MER_AWGN_log) caractérisant un défaut d'amplitude et de phase stochastique et correspondant à un rapport d'erreur de modulation logarithmique est déterminée par inversion et logarithmisation de la seconde taille des défauts (MER_AWGN_lin) caractérisant un défaut d'amplitude et de phase stochastique.

**9.** Procédé selon l'une des revendications 6 à 8, **caractérisé en ce que**
une quatrième taille des défauts (EVM_AWGN_lin) caractérisant un défaut d'amplitude et de phase stochastique et correspondant à un rapport de vecteur d'erreur linéaire est déterminée par scalarisation du premier paramètre (MER_AWGN_lin) caractérisant un défaut d'amplitude et de phase stochastique par la puissance de signal maximale (P_Signal_Max) du signal de mesure non perturbé.

**10.** Procédé selon la revendication 9, **caractérisé en ce que**
une cinquième taille des défauts (EVM_AWGN_log) caractérisant un défaut d'amplitude et de phase stochastique et correspondant à un rapport de vecteur d'erreur logarithmique est déterminée par inversion et logarithmisation de la cinquième taille des défauts (MER_AWGN_lin) caractérisant un défaut d'amplitude et de phase stochastique.

**11.** Procédé de détermination de tailles des défauts respectives caractérisant un défaut de phase déterministe d'un signal d'erreur comportant les étapes de procédé suivantes :

• détermination d'une première taille des défauts (m_AM) caractérisant un défaut d'amplitude déterministe selon la revendication 1,

• formation d'une première différence à partir d'une première somme $(\sum_{i=l}^{n} A^2_{Störung\_l\_i})$ associée aux composantes en phase détectées selon la revendication 1 et de la première taille des défauts (m_AM) caractérisant un défaut d'amplitude déterministe élevée au carré multipliée par une seconde somme $(\sum_{i=l}^{n} A^2_{Ideal\_l\_i})$ associée aux amplitudes détectées selon la revendication 1,

• détermination d'une composante en quadrature (A_Störung-Ideal_Q), dont la phase est orthogonale à la phase de signal perturbé, associée au défaut contenu dans le signal de mesure perturbé,

• formation d'une seconde différence $(\sum_{i=l}^{n} A^2_{Störung-Ideal\_Q} - \sum_{i=l}^{n} A^2_{AWGN\_l})$ à partir d'une troisième

somme $(\sum_{i=l}^{n} A^2_{Störung-Ideal\_Q})$ des composantes en quadrature détectées élevées au carré ($A^2_{gtörung-Ideal\_Q}$) et de la première différence et

• détermination d'une première taille des défauts ($P_{PM\_Störung}$) caractérisant un défaut de phase déterministe par scalarisation de la seconde différence $(\sum_{i=l}^{n} A^2_{Störung-Ideal\_Q} - \sum_{i=l}^{n} A^2_{AWGN\_l})$ grâce au nombre

(n) de composantes en phase de la classe utilisée.

12. Procédé selon la revendication 11, **caractérisé en ce que**
une seconde taille des défauts (MER_PM_lin) caractérisant un défaut de phase déterministe et correspondant à un rapport d'erreur de modulation linéaire est déterminée par scalarisation de la première taille des défauts P_PM_Störung) caractérisant un défaut de phase déterministe par la puissance de signal moyenne ($P_{Signal}$, MER_AWGN_lin) du signal de mesure non perturbé.

13. Procédé selon la revendication 12, **caractérisé en ce que**
une troisième taille des défauts (MER_PM_log) caractérisant un défaut de phase déterministe et correspondant à un rapport d'erreur de modulation logarithmique est déterminée par inversion et logarithmisation de la seconde taille des défauts (MER_PM_lin) caractérisant un défaut de phase déterministe.

14. Procédé selon l'une des revendications 11 à 13, **caractérisé en ce que**
une quatrième taille des défauts (EVM_PM_lin) caractérisant un défaut de phase déterministe et correspondant à un rapport de vecteur d'erreur linéaire est déterminée par scalarisation de la première taille des défauts ($P_{PM\_Störung}$) caractérisant un défaut de phase déterministe grâce à la puissance de signal maximale ($P_{Signal\_Max}$) du signal de mesure non perturbé.

15. Procédé selon la revendication 14, **caractérisé en ce que**
une cinquième taille des défauts (EVM_PM_log) caractérisant un défaut de phase déterministe et correspondant à un rapport de vecteur d'erreur logarithmique est déterminée par inversion et logarithmisation de la quatrième taille des défauts (EVM-PM_lin) caractérisant un défaut de phase déterministe.

16. Dispositif pour déterminer des tailles des défauts respectives caractérisant un défaut d'amplitude déterministe d'un signal de mesure comportant
une unité (1) pour détecter les composantes en phase ($A_{Störung\_1\_i}$) du signal de mesure perturbé, qui présentent une phase identique au signal de mesure non perturbé,
une unité (2) pour trier les composantes en phase détectées ($A_{Störung\_1\_i}$) correspondant à la grandeur de la composante en phase ($A_{Ideal\_1\_i}$) du signal de mesure non perturbé respectif dans au moins deux classes de composantes en phase ($A_{Ideal\_1\_i\_groβ}$, $A_{Störung\_1\_i\_groβ}$, $A_{Ideal\_1\_i\_klein}$, $A_{Störung\_1\_i\_klein}$),
des unités (3, 4) pour additionner les composantes en phase ($A_{Störung\_1\_i\_groβ}$, $A_{Störung\_1\_i\_klein}$) du signal de mesure perturbé élevées au carré associées respectivement à une classe à une première somme respective et pour additionner les amplitudes élevées au carré associées ($A^2_{Ideal\_1\_i\_groβ}$, $A^2_{Ideal\_1\_i\_klein}$) du signal de mesure non perturbé à une seconde somme respective $(\sum_{i=l}^{g} A^2_{Ideal\_l\_i\_groβ}, \sum_{i=l}^{k} A^2_{Ideal\_l\_i\_klein})$ et

une unité (4) pour déterminer les tailles des défauts ($m_{AM}$, MER_AM_lin, MER_AM_log, EVM_AM_lin, EVM_AM_log) respectives caractérisant un défaut d'amplitude déterministe à partir des premières et secondes sommes respectives

$(\sum_{i=l}^{k} A^2_{Störung\_l\_i\_groβ}, \sum_{i=l}^{k} A^2_{Störung\_l\_i\_klein}, \sum_{i=l}^{g} A^2_{Ideal\_l\_i\_groβ}, \sum_{i=l}^{k} A^2_{Ideal\_l\_i\_klein})$ détectées à partir de deux classes.

17. Dispositif pour déterminer des tailles des défauts caractérisant respectivement un défaut d'amplitude et de phase stochastique d'un signal de mesure, comportant
une unité (1) pour détecter les composantes en phase ($A_{störung\_1\_i}$) du signal de mesure perturbé, qui présentent une phase identique par rapport au signal de mesure non perturbé,
une unité (2) pour trier les composantes en phase détectées ($A_{störung\_1\_i}$) correspondant à la grandeur de la composante en phase ($A_{Ideal\_1\_i}$) du signal de mesure non perturbé respectif dans au moins deux classes de composantes en phase ($A_{Ideal\_1\_i\_gro\beta}$, $A_{Störung\_1\_i\_gro\beta}$, $A_{Ideal\_1\_i\_klein}$, $A_{Störung\_1\_i\_klein}$),
des unités pour additionner les composantes en phase ($A_{Störung\_1\_1\_gro\beta}$, $A_{Störung\_1\_1\_klein}$) du signal de mesure perturbé élevées au carré associées respectivement à une classe à une première somme respective

$$\left(\sum_{i=l}^{k} A^2{}_{Störung\_l\_i\_gro\beta} \, , \sum_{i=l}^{k} A^2{}_{Störung\_l\_i\_klein}\right)$$ et pour additionner les amplitudes élevées au carré associées ($A^2{}_{Ideal\_1\_i\_gro\beta}$, $A^2{}_{Ideal\_1\_i\_klein}$) du signal de mesure non perturbé à une seconde somme respective

$$\left(\sum_{i=l}^{g} A^2{}_{Ideal\_l\_i\_gro\beta} \, , \sum_{i=l}^{k} A^2{}_{Ideal\_l\_i\_klein}\right),$$

une unité (5') pour déterminer une première taille des défauts ($m_{AM}$) caractérisant un défaut d'amplitude déterministe,
un dispositif de formation de différence (6) pour former une première différence à partir d'une première somme

$$\left(\sum_{i=l}^{n} A^2{}_{Störung\_l\_i}\right)$$ associée aux composantes en phase détectées et une taille des défauts ($m_{AM}$) caractérisant un défaut d'amplitude déterministe élevée au carré et multipliée par une seconde somme $\left(\sum_{i=l}^{n} A^2{}_{Ideal\_l\_i}\right)$ associée aux amplitudes détectées et
une unité (7) pour déterminer des paramètres ($P_{AWGN}$, MER_AWGN_lin, MER_AWGN_log, EVM_AWGN_lin, EVM_AWGN_log) caractérisant respectivement un défaut d'amplitude et de phase stochastique grâce à la scalarisation de la première différence doublée par le nombre (n) de composantes en phase détectées.

18. Dispositif pour déterminer des tailles des défauts respectives caractérisant un défaut de phase déterministe d'un signal de mesure, comportant
une unité (1) pour déterminer les composantes en phase ($A_{Störung\_1\_i}$) du signal de mesure perturbé, qui présentent une phase identique à un signal de mesure non perturbé,
une unité (2) pour trier les composantes en phase détectées ($A_{Störung\_1\_i}$) correspondant à la grandeur de la composante en phase ($A_{Ideal\_1\_i}$) du signal de mesure non perturbé respectif dans au moins deux classes de composantes en phase ($A_{Ideal\_1\_i\_gro\beta}$, $A_{Störung\_1\_i-gro\beta}$, $A_{Ideal\_1\_i\_klein}$, $A_{Störung\_1\_i\_klein}$),
des unités (3, 4) pour additionner les composantes en phase du signal de mesure perturbé ($A_{Störung\_1\_i\_gro\beta}$, $A_{Störung\_1\_1\_klein}$) élevées au carré associées à une classe respective à une première somme respective

$$\left(\sum_{i=l}^{k} A^2{}_{Störung\_l\_i\_gro\beta} \, , \sum_{i=l}^{k} A^2{}_{Störung\_l\_i\_klein}\right)$$ et pour additionner les amplitudes élevées au carré associées ($A^2{}_{Ideal\_1\_i\_gro\beta}$, $A^2{}_{Ideal\_1\_i\_klein}$) du signal de mesure non perturbé à une seconde somme respective

$$\left(\sum_{i=l}^{g} A^2{}_{Ideal\_l\_i\_gro\beta} \, , \sum_{i=l}^{k} A^2{}_{Ideal\_l\_i\_klein}\right),$$

une unité (5') pour déterminer une première taille des défauts ($m_{AM}$) caractérisant un défaut d'amplitude déterministe,
un dispositif de formation de différence (6) pour former une première différence à partir d'une première somme

$$\left(\sum_{i=l}^{n} A^2{}_{Störung\_l\_i}\right)$$ associée aux composantes en phase détectées et d'une première taille des défauts ($m_{AM}$)

caractérisant un défaut d'amplitude déterministe, élevée au carré et multipliée par une seconde somme

$$\left(\sum_{i=l}^{n} A^2{}_{Ideal\_l\_i}\right)$$ associée à une amplitude à déterminer,

une unité (9) pour détecter des composantes en quadrature ($A_{Störung-Ideal\_Q}$) des défauts contenus dans le signal de mesure non perturbé,
une unité (10) pour additionner les composantes en quadrature élevées au carré ($A_{Störung-Ideal\_Q}$) des défauts contenus dans le signal de mesure non perturbé à une troisième somme $\left(\sum_{i=l}^{n} A^2{}_{Störung-Ideal\_Q}\right),$

un dispositif de formation de différence (6) pour former une seconde différence

$$\left(\sum_{i=l}^{n} A^2{}_{Störung-Ideal\_Q} - \sum_{i=l}^{n} A^2{}_{AWGN\_l}\right)$$ à partir de la troisième somme $\left(\sum_{i=l}^{n} A^2{}_{Störung-Ideal\_Q}\right)$

et de la première différence et
une unité (11) pour déterminer les tailles des défauts ($P_{PM\_Störung}$, MER_PM_lin, MER_PM_log, EVM_PM_lin, EVM_PM_log) par scalarisation de la seconde différence $\left(\sum_{i=l}^{n} A^2{}_{Störung-Ideal\_Q} - \sum_{i=l}^{n} A^2{}_{AWGN\_l}\right)$ par le nombre (n) de composantes en phase détectées.

Q

deterministische
Amplitudenstörung

ungestörtes
Messsignal

I

## Fig. 1A

Q

deterministische
Phasenstörung

ungestörtes
Messsignal

I

## Fig. 1B

Q

stochastische Amplituden-
und Phasenstörung

ungestörtes
Messsignal

I

## Fig. 1C

Q

deterministische Amplituden-
u. stochastische Amplituden-
und Phasenstörung

ungestörtes
Messsignal

I

## Fig. 1D

Q

deterministische Phasen u.
stochastische Amplituden-
und Phasenstörung

ungestörtes
Messsignal

I

## Fig. 1E

Q

deterministische und
stochastische Amplituden-
und Phasenstörung

ungestörtes
Messsignal

I

## Fig. 1F

25

Fig. 2

Fig. 3

Fig. 4A

Start

Mehrfaches Erfassen der In-Phase-Anteile des
gestörten Messsignals — S100

Sortieren der erfassten In-Phase-Anteile des
gestörten Messsignals in mindestens zwei Klassen — S110

Summieren der zu jeder Klasse jeweils gehörigen quadrierten
In-Phase-Anteile zu jeweils einer ersten Summe und der
zugehörigen quadrierten Amplituden des ungestörten Messsignals
zu jeweils einer zweiten Summe — S120

Ermitteln einer ersten, eine deterministische Amplitudenstörung
kennzeichnenden Fehlergröße aus den zu zwei Klassen jeweils
ermittelten ersten und zweiten Summen — S130

Bilden einer ersten Differenz aus einer zu erfassten
In-Phase-Anteilen jeweils gehörigen ersten Summe und der mit
einer zu erfassten Amplituden jeweils gehörigen zweiten Summe
multiplizierten quadrierten ersten, eine deterministische Amplitudenstörung kennzeichnenden Fehlergröße — S140

Ermitteln einer ersten, eine stochastische Amplituden- und
Phasenstörung kennzeichnenden Fehlergröße durch skalieren
der doppelten ersten Differenz durch die Anzahl von erfassten
In-Phase-Anteilen — S150

Ermitteln einer zweiten, dritten, vierten und fünften eine
stochastische Amplituden- und Phasenstörung kennzeichnenden
Kenngröße in Abhängigkeit der ersten, eine stochastische
Amplituden- und Phasenstörung kennzeichnenden Fehlergröße — S160

Ende

Fig. 4B

Start

Mehrfaches Erfassen von In-Phase- und Quadraturanteilen
des gestörten Messsignals — S300

Sortieren der erfassten In-Phase-Anteile und Quadratur-Anteile
des gestörten Messsignals in mindestens zwei Klassen — S310

Summieren der zu jeder Klasse jeweils gehörigen quadrierten
In-Phase-Anteile zu jeweils einer ersten Summe und der
zugehörigen quadrierten Amplituden des ungestörten Messsignals
zu jeweils einer zweiten Summe — S320

Ermitteln einer ersten, eine deterministische Amplitudenstörung
kennzeichnenden Fehlergröße aus den zu zwei Klassen jeweils
ermittelten ersten und zweiten Summen — S330

Bilden einer ersten Differenz aus einer zu erfassten
In-Phase-Anteilen jeweils gehörigen ersten Summe und der mit
einer zu erfassten In-Phase-Anteilen jeweils gehörigen zweiten
Summe multiplizierten quadrierten ersten, eine deterministische
Amplitudenstörung kennzeichnenden Fehlergröße — S340

Summieren der erfassten quadrierten Quadratur-Anteile
zu einer dritten Summe — S350

Bilden einer zweiten Differenz aus der ermittelten dritten
Summe und der ersten Differenz — S360

Ermitteln einer ersten, eine deterministische Phasenstörung
kennzeichnenden Kenngröße durch skalieren der zweiten
Differenz durch die Anzahl von erfassten In-Phase-Anteilen — S370

Ermitteln einer zweiten, dritten, vierten und fünften eine
deterministische Phasenstörung kennzeichnenden Kenngröße in
Abhängigkeit der ersten eine deterministische
Phasenstörung kennzeichnenden Kenngröße — S380

Fig. 4C

Ende

**1** — Einheit zum Erfassen von In-Phase-Anteilen der Störung im Messsignal

**2** — Einheit zum Sortieren der In-Phase-Anteile in Klassen

**3** — Einheit zum Summieren der In-Phase-Anteile der Störung im Mess-signal zu erster Summe

**4** — Einheit zum Summieren der Amplituden des ungestörten Messsignals zu zweiter Summe

**5** — Einheit zum Ermitteln von eine deterministische Amplitudenstörung kennzeichnenden Fehlergrößen

Ausgänge: $m_{AM}$, MER_AM_lin, MER_AM_log, EVM_AM_lin, EVM_AM_log

**Fig. 5A**

Fig. 5B

Fig. 5C

**EP 2 326 039 B1**

**IN DER BESCHREIBUNG AUFGEFÜHRTE DOKUMENTE**

**In der Beschreibung aufgeführte Patentdokumente**

- DE 19949774 A1